# EUROPEAN PATENT APPLICATION

(11) **EP 2 335 980 A2**
(43) Date of publication of application: **22.06.2011**
(21) Application number: 09811286.5
(22) Date of filing: 03.09.2009
(51) Int. Cl.: B60R 11/02

(54) **VEHICLE-MOUNTED DISPLAY DEVICE, EXPANSION DEVICE, AND INDEPENDENT FUNCTIONAL DEVICE**

(30) Priority: 03.09.2008 JP 2008226086
(71) Applicant: Kabushiki Kaisha Toshiba, Minato-ku Tokyo 105-8001 (JP)
(72) Inventor: INABA, Hitoshi, Minato-ku, Tokyo 105-8001 (JP); SHIMODA, Koji, Minato-ku, Tokyo 105-8001 (JP)
(74) Representative: HOFFMANN EITLE
(86) International application number: PCT/JP2009/004345
(87) International publication number: WO 2010/026756

(57) **Abstract**

The in-vehicle display device includes a central information display device 10, an extension device 20, and an individual functional device 30 formed separately from the central information display device 10. The individual functional device 30 includes a storage device for storing application software to execute the function of the central information display device 10. A CPU for executing the application software may be in the central information display device 10, the extension device 20, or the individual functional device 30.

## Description

### TECHNICAL FIELD

The present invention relates to an in-vehicle display device, an extension device, and an individual functional device, and particularly to an in-vehicle display device, an extension device, and an individual functional device that enable their function to be selectively extended.

### BACKGROUND ART

Recent in-vehicle display devices have advanced functions. That is to say, an in-vehicle display device is used not only as a central information display device for displaying the environments of an automobile, but also as a control panel or a radio and a CD player, and may even serve as a display device of a car-navigation system. Furthermore, an in-vehicle display device may be utilized as a display panel of a television receiver.

The conventional in-vehicle display device has a configuration in which these multiple functions are incorporated (for example, refer to Patent Document 1).

Patent Document 1: Japanese Patent Application Laid-Open Publication No. 2008-143520

### DISCLOSURE OF INVENTION

In the conventional in-vehicle display device with the technology described in the Patent Document 1, undesired functions for some users are also integrally provided. Accordingly, for these users, the price of the conventional in-vehicle display device is comparatively high.

On the other hand, even when a new technology related to the in-vehicle display device is developed, in many cases, the technology needs to be added to the existing in-vehicle display devices already purchased by users, and consequentially, those users who want the new technology need to replace the existing in-vehicle display device with a new one.

The present invention has been made in view of the above-mentioned problem, and it is an object or the invention to provide an in-vehicle display device, an extension device, and an individual functional device that enable their function to be selectively extended.

In order to achieve the object, the present invention provides an in-vehicle display device, an extension device, and an individual functional device including: a central information display device which has a liquid crystal display and causes it to display an image; an individual functional device which is formed separately from the central information display device, and extends the function thereof; and an extension device which connects between the central information display device and the individual functional device.

Also, the present invention provides an in-vehicle display device in which the central information display device includes: a CPU for executing application software to extend the function of the central information display device; and a data communication controller for controlling data communications, and the extension device includes a HUB connectable to the data communication controller.

Also, the present invention provides an in-vehicle display device in which the extension device includes: a CPU for executing application software to extend the function of the central information display device; a data communication controller for controlling data communications; and a HUB connectable to the data communication controller.

Also, the present invention provides an in-vehicle display device in which the individual functional device formed separately from the central information display device includes: a memory with a concealed area, which stores application software to extend the function of the central information display device; and a CPU for executing the application software, and the extension device which connects the central information display device and the individual functional device includes: the CPU; a data communication controller for controlling data communications; and a HUB connectable to the data communication controller.

Also, the present invention provides an in-vehicle display device in which the central information display device has a function of identifying an individual functional device which is formed separately from the central information display device and extends the function of the central information display device.

Also, the present invention provides an in-vehicle display device in which the central information display device has a function of authenticating the individual functional device when identification data in a concealed area of a memory storing application software of the individual functional device which is formed separately from the central information display device, and identification data stored in the central information display device coincide with each other.

Also, the present invention provides an extension device in which a central information display device which is configured to display an image on a liquid crystal display, and an individual functional device which extends a function of the central information display device are separately formed, and the extension device connects the central information display device and the individual functional device.

Also, the present invention provides an extension device in which the central information display device including: a CPU for executing application software to extend the function of the central information display device; and a data communication controller for controlling data communications, and the individual functional device including a memory with a concealed area, which stores the application software, are separately formed, and the extension device connects the central information display device and the individual functional device, and includes a HUB connectable to the data communication controller.

Also, the present invention provides an extension device in which the central information display device and the individual functional device including a memory with a concealed area, which stores application software to extend the function of the central information display device, are separately formed, and the extension device connects the central information display device and the individual functional device and includes: a CPU for executing application software to extend the function of the central information display device; a data communication controller for controlling data communications; and a HUB connectable to the data communication controller.

Also, the present invention provides an extension device in which the extension device connects the central information display device and the individual functional device including: a memory with a concealed area, which stores application software to extend the function of the central information display device; and a CPU for executing the application software, and the extension device includes: a CPU; a data communication controller for controlling data communications; and a HUB connectable to the data communication controller.

Also, the present invention provides an extension device in which a central information display device which is configured to display an image on a liquid crystal display and an individual functional device which extends the function of the central information display device are formed separately, and the extension device connects the central information display device and the individual functional device, and has the function of identifying an individual functional device which extends the function of the central information display device.

Also, the present invention provides an extension device in which the central information display device has a function of authenticating the individual functional device when identification data in a concealed area or a memory storing the application software of the individual functional device which is formed separately from the central information display device and identification data stored in the extension device coincide with each other.

Also, the present invention provides an individual functional device which is formed separately from an central information display device configured to display an image on a liquid crystal display, and is connected to the central information display device via an extension device, and extends the function of the central information display device.

Also, the present invention provides an individual functional device in which the individual functional device is formed separately from the central information display device including: a CPU for executing application software to extend the function of the central information display device; and a data communication controller for controlling data communications, and is connected to the central information display device via the extension device including a HUB connectable to the data communication controller, and the individual functional device includes a memory with a concealed area, which stores the application software.

Also, the present invention provides an individual functional device in which the individual functional device is connected to the central information display device via an extension device including a CPU for executing application software to extend the function of the central information display device; a data communication controller for controlling data communications; and a HUB connectable to the data communication controller, and includes a memory with a concealed area, which stores the application software.

Also, the present invention provides an individual functional device in which the individual functional device is connected to the central information display device via an extension device including: a CPU; a data communication controller for controlling data communications; and a HUB connectable to the data communication controller, and the individual functional device includes: a memory with a concealed area, which stores application software to extend the function of the central information display device, and a CPU for executing the application software.

Also, the present invention provides an individual functional device in which the central information display device has a function of identifying an individual functional device which is formed separately from the central information display device and extends the function of the central information display device.

Also, the present invention provides an individual functional device in which the central information display device has a function of authenticating the individual functional device when identification data in a concealed area of a memory storing application software of the individual functional device which is formed separately from the central information display device and identification data stored in the central information display device coincide with each other.

### EFFECT OF THE INVENTION

The present invention makes it possible to achieve the following effects: the central information display device can be manufactured at low cost, while a user can selectively extend the function of the central information display device.

### BRIEF DESCRIPTION OF DRAWINGS

Figure 1 is a schematic diagram showing the configuration of a first embodiment of an in-vehicle display device of the present invention.
Figure 2 is a block diagram showing an exemplary individual functional device 30 for extending the navigation function of a central information display device 10.
Figure 3 is a block diagram showing the configuration of an integrated individual functional device for navigation function extension.
Figure 4 is a block diagram showing the configuration of an AV module 304 as the individual functional device 30 for extending the audiovisual function of the central information display device 10.
Figure 5 is a block diagram showing the configuration of an individual functional device for one-seg feature extension as the individual functional device 30 for extending the television receiving function of the central information display device 10.
Figure 6 is a flowchart showing the operation of the central information display device 10.
Figure 7 is a configuration diagram schematically showing an in-vehicle display device and an individual functional device of a second embodiment.
Figure 8 is a configuration diagram schematically showing an in-vehicle display device and an individual functional device of a third embodiment.
Figure 9 is a block diagram showing an exemplary individual functional device 32 for extending the navigation function of a central information display device 11.
Figure 10 is a block diagram showing the configuration of an integrated navigation module 308 as an integrated individual functional device for navigation function extension.
Figure 11 is a block diagram showing the configuration of an AV module 309 as the individual functional device 32 for extending the audiovisual function of the central information display device 11.
Figure 12 is a block diagram showing the configuration of an individual functional device for one-seg feature extension as the individual functional device 32 for extending the television receiving function of the central information display device 11.
Figure 13 is a diagram showing an exemplary arrangement of an extension device 22 near a windshield.
Figure 14 is a diagram showing an exemplary arrangement of the extension device 22 on the top of the central information display device 11.
Figure 15 is a diagram showing an exemplary integrated configuration of the central information display device 11 and the extension device 22.
Figure 16 is a schematic diagram showing the configuration of the first device authentication system.
Figure 17 is a flowchart showing the operation of the first device authentication system.
Figure 18 is a diagram showing a modification of the first device authentication system.
Figure 19 is a schematic diagram showing the configuration of a second device authentication system.
Figure 20 is a flowchart showing the operation of the second device authentication system.
Figure 21 is a continued flowchart showing the operation of the second device authentication system.
Figure 22 is a diagram showing a modification of the second device authentication system.
Figure 23 is a schematic diagram showing the configuration of a third device authentication system.
Figure 24 is a flowchart showing the operation of the third device authentication system.
Figure 25 is a continued flowchart showing the operation of the third device authentication system.
Figure 26 is a flowchart showing the operation of a fourth device authentication system.
Figure 27 is a continued flowchart showing the operation of the fourth device authentication system.

### BEST MODES FOR CARRYING OUT THE INVENTION

Hereinafter, an embodiment of an in-vehicle display device according to the present invention is described in detail using the drawing. The in-vehicle display device of the present invention is installed in a vehicle such as an automobile, a bus, or a motorcycle. The in-vehicle display device of the present invention may be previously incorporated into the front panel of e.g., an automobile, or may be constructed as a separate body and then later installed in e.g., an automobile. Hereinafter, the detail is described.

### [First Embodiment]

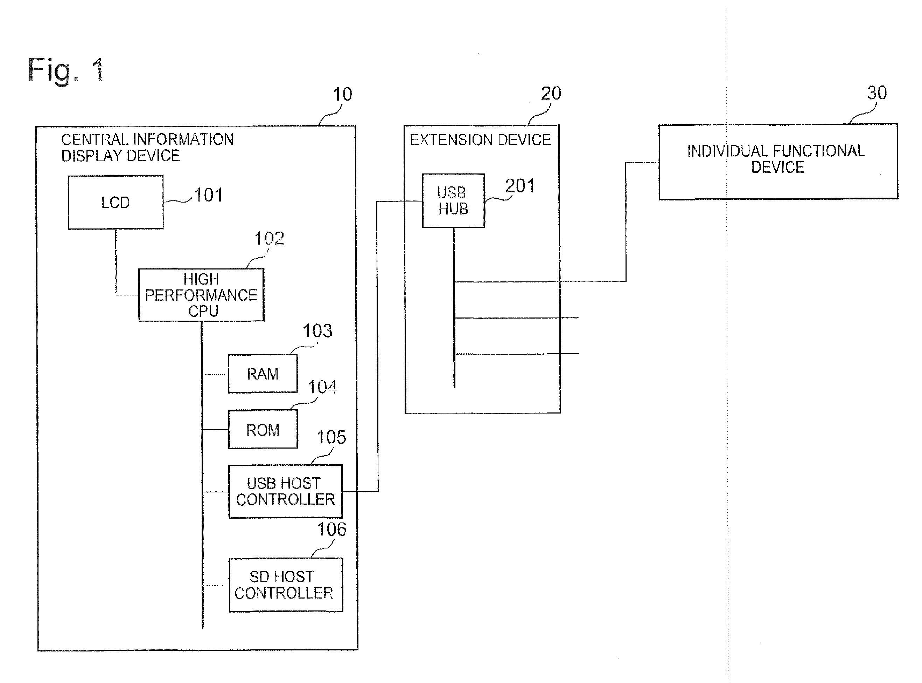

Figure 1 is a schematic diagram showing the configuration of a first embodiment of an in-vehicle display device of the present invention. As shown in Figure 1, the in-vehile display device of the present embodiment includes a central information display device 10, an extension device 20, and an individual functional device 30.

The central information display device 10 may be previously incorporated into the front panel of e.g., an automobile, or may be constructed as a separate body and then later installed in e.g., an automobile. The central information display device 10 includes an LCD (liquid crystal display) 101, a high performance CPU 102, a RAM 103 and a ROM 104 as storage devices, a data communication bus, a data communication controller, e.g., a USB host controller 105, for controlling USE (Universal Serial Bus) which is, e.g., a data communication interface, a memory interface controller, e.g., an SD host controller 106 for controlling a copyright protected memory with a concealed area, e.g., an SD memory card or a built-in SD memory.

The LCD 101 receives RGB signals from the high performance CPU 102, and displays an image on a display screen. Also, the LCD 101 is provided with a touch panel and an input from the touch panel is inputted to the high performance CPU 102.

The high performance CPU 102 has the capacity of executing various application programs of a later-described individual functional device 30. The RAM 103 can use SDRAM (synchronous DRAM). The ROM 104 can use a Flash ROM. The USB host controller 105 may be a controller for data communications other than USE.

The extension device 20 includes a HUB, e.g., a USB HUB201. The USB HUB201 is connected to a data communication controller of the central information display device 10, e.g., the USB host controller 105. The extension device 20 may be integrally formed with, or separately formed from the central information display device 10. The USB HUB201 includes multiple HUB ports.

The individual functional device 30 is formed separately from the central information display device 10 and the extension device 20. The individual functional device 30 is detachably attached to the extension device 20. The individual functional device 30 and the extension device 20 are connected via data communication interface such as a USB. The shape of a jack connecting the individual functional device 30 and the extension device may be different from the shape of a jack for data communication interface such as a normal USB.

The individual functional device 30 is connected to the extension device 20, and operates in cooperation with the central information display device 10 to extend the function of the central information display device 10. As described later, the individual functional device 30 is configured to include a device controller of data communication interface like a USB device controller, however, this configuration changes depending on the function of the individual functional device 30 to be achieved.

Hereinafter, specific examples of the individual functional device 30 are described. The individual functional device 30 is not limited to the following specific examples.

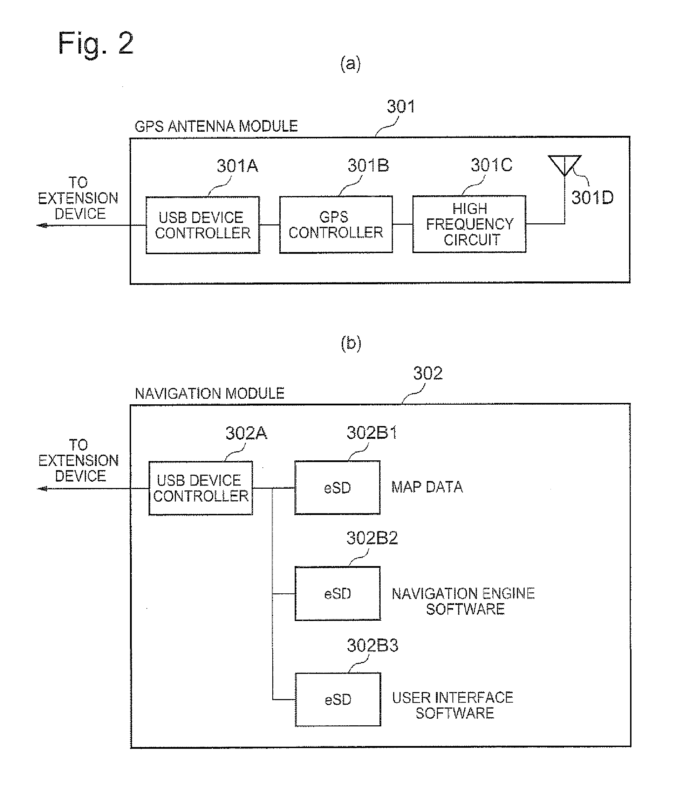

Figure 2 is a block diagram showing an exemplary individual functional device 30 for adding/extending the navigation function of the central information display device 10. As shown in Figure 2, the individual functional device for navigation function extension includes a GPS antenna module 301 shown in Figure 2(a), and a navigation module 302 shown in Figure 2(b).

The GPS antenna module 301 includes an antenna 301D for receiving signals, a high frequency circuit 301C connected to the antenna 301D to process the received signals, a GPS controller 301B for generating positional information from the processed signals, and a USB device controller 301A for controlling the operation of the GPS controller 301B and is connected to the USB HUB201 of the extension device 20.

The navigation module 302 includes a memory with a concealed area, which is a storage device storing map data i.e., data related to map, for example, eSD (embedded Secure Digital Memory: embedded SD memory) 302B1 eSD 302B2 which is a storage device storing navigation engine software i.e., software for performing navigation, and eSD 302B3 which is a storage device storing user interface software that serves as an interface between a user and an individual functional device for navigation function extension.

Now, a memory with a concealed area, for example, eSD (embedded Secure Digital Memory: embedded SD memory) is described. The eSD is NAND flash memory having a concealed area. The eSD can store encoded data which needs copyright protection such as music data, map data, and non-free application data, and an encryption key of the data as needed. Data which is not encoded can be also stored as needed.

Although multiple eSD(s) are shown in Figure 2(b), a configuration can be made such that the navigation module 302 includes a single eSD that stores map data, navigation engine software, and user interface software.

The navigation module 302 further includes a USB device controller 302A which controls these eSDs, and connects them to the USB HUB201 of the extension device 20.

The individual functional device for navigation function extension is configured such that a GPS antenna module 301 and the navigation module 302 are formed as a separate body. Accordingly, the effect is achieved that the size of each module can be reduced.

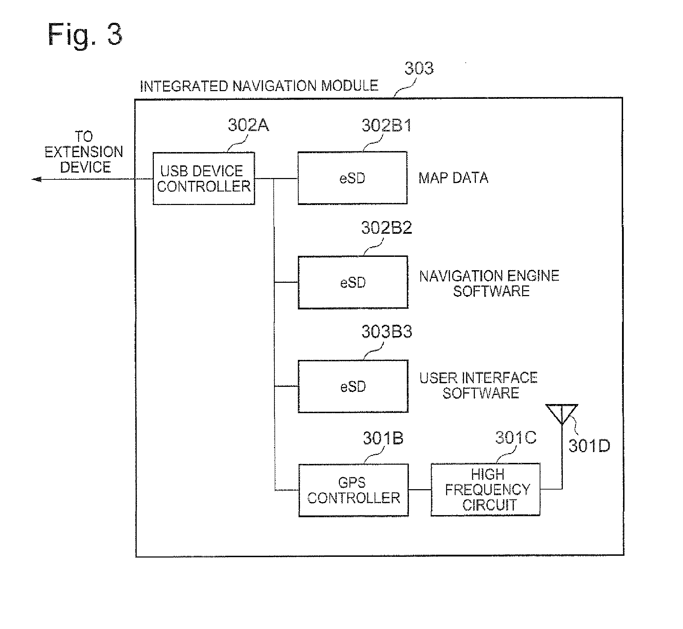

Figure 3 is a block diagram showing the configuration of the integrated individual functional device for navigation function extension. As shown in Figure 3, the integrated individual functional device for navigation function extension as a navigation module having the GPS antenna module includes eSD 302B1, eSD 302B2, eSD 303B3 storing user interface software, a GPS controller 301B, a high frequency circuit 301C and an antenna 301D.

The integrated individual functional device for navigation function extension further includes a USB device controller 302A which is connected to control eSD 302B1, eSD 302B2, eSD 303B3, the GPS controller 301B, and connects them to the USB HUB201 of the extension device 20.

In the integrated individual functional device for navigation function extension, the GPS antenna module and the navigation module are integrally formed. Accordingly, the effect is achieved that installation operation and un-installation operation of the device are simple.

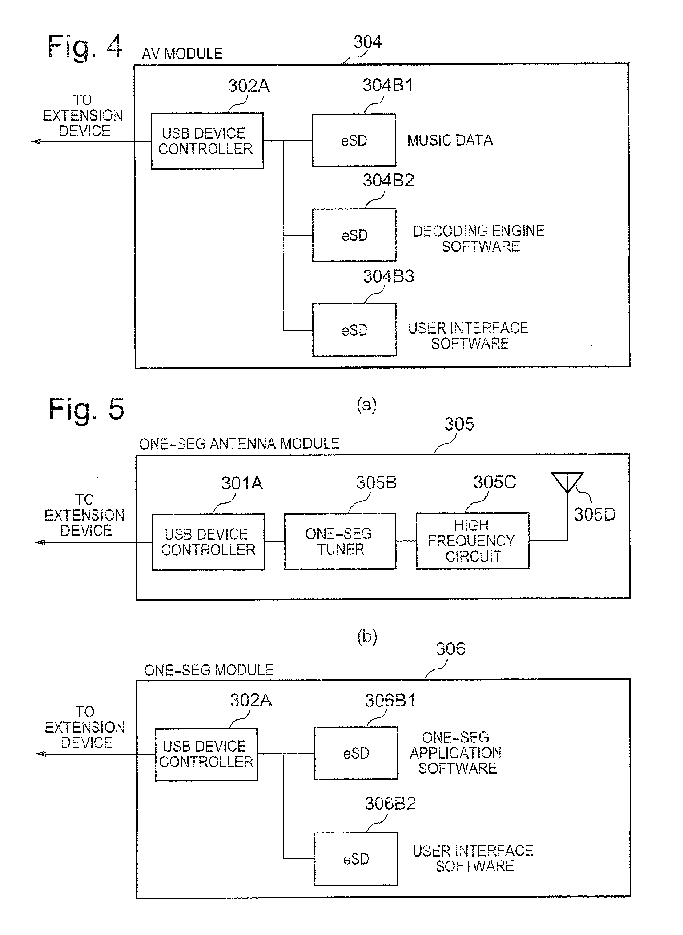

Figure 4 is a block diagram showing the configuration of an AV module 304 as the individual functional device 30 for extending the audiovisual function of the central information display device 10. As shown in Figure 4, the AV module 304 includes eSD 304B1 for storing music data such as music or video, eSD 304B2 for storing decoding engine software i.e., software which decodes music data, eSD 304B3 as a storage device for storing the user interface software that serves as an interface between a user and the AV module 304, and USB device controller 302A which controls these eSDs and connects them to the USB HUB201 of the extension device 20.

Although a memory with multiple concealed areas, for example, eSD, is shown in Figure 4, a configuration can be made such that the AV module 304 includes a single eSD that stores music data, decoding engine software, and user interface software.

Also, a configuration can be made such that the AV module 304 is connected to an upper-level device such as a personal computer or an audio device so as to store music data and decoding engine software from these upper-level devices, thus the effect is achieved that any music can be enjoyed in the vehicle.

Figure 5 is a block diagram showing the configuration of an individual functional device for one-seg feature extension as the individual functional device 30 for extending the television receiving function of the central information display device 10. As shown in Figure 5, the individual functional device for one-seg feature extension includes one-seg antenna module 305 shown in Figure 5(a), and one-seg module 306 shown in Figure 5(b).

The one-seg antenna module 305 includes an antenna 305D for receiving television signals, a high frequency circuit 305C for processing the received signals, one-seg tuner 305B for selecting television signals of an arbitrary channel from the processed high frequency signals, and USB device controller 301A which controls onc-seg tuner 305B and is connected to USB HUB201 of the extension device 20.

The one-seg module 306 includes eSD 306B1 as a storage device to store one-seg application software for executing the function of generating the image data to be displayed on LCD 101 and the voice data to be reproduced through a loudspeaker from the television signals in a channel selected by one-seg tuner 305B; eSD 306B2 as a storage device for storing user interface software which serves as an interface between a user and the individual functional device for one-seg feature extension; and USB device controller 302A which controls these eSDs and connects them to USB HUB201 of the extension device 20.

Although a memory with multiple concealed areas, for example, eSD, is shown in Figure 5(b), a configuration can be made such that one-seg module 306 includes only one eSD, which stores one-seg application software and user interface software.

The individual functional device for one-seg feature extension provides an effect that users can enjoy television images in a vehicle.

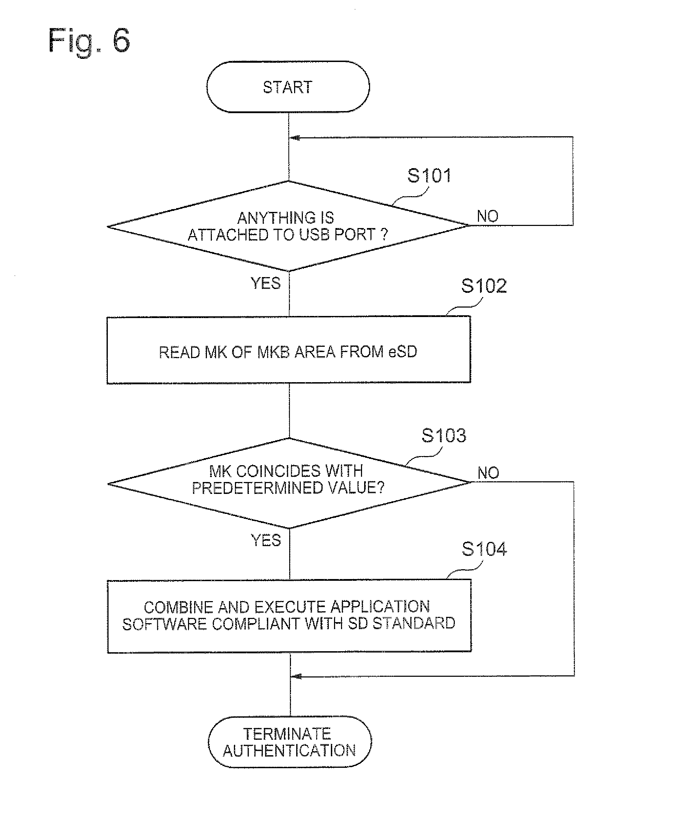

Next, a method of identifying the individual functional device is described. As shown in Figure 6, in step S101, the extension device 20 determines whether or not anything is connected to its USB port. In the case where the extension device 20 has recognized a new connection, the process proceeds to step S102, otherwise returns to STARS.

In step S102, the extension device 20 reads MK (medium key) of MKB (medium key block) area from a memory with a concealed area, for example, eSD of the individual functional device 30.

In step S103, it is determined whether or not MK and a predetermined value coincide with each other. In the case where they do not coincide with each other, the individual functional device 30 is not identified. In the case where they coincide with each other, the process proceeds to step S104.

In step S104, the extension device 20 reads application software from eSD of the individual functional device 30, and application software compliant with the SD standard is combined and executed. Hereinafter, the operation of each individual functional device 30 is described. In the case where the individual functional device for navigation function extension is attached to the extension device 20, the central information display device 10 identifies the individual functional device, and reads and executes the navigation engine software which is application software according to the above-described flow of Figure 6.

The central information display device 10 reads positional information from GPS antenna module 301, reads the map data from eSD 302B1, and stores them in a memory. The central information display device 10 executes the navigation engine software, reads the positional information and map data which have been stored in the memory according to the instruction from the navigation engine software, thus achieves the navigation function.

The integrated navigation module 303 also operates according to the above operation.

In the case where the AV module 304 is attached to the extension device 20, the central information display device 10 identifies the individual functional device, and reads and executes decoding engine software which is application software according to the above-described flow of Figure 6.

The central information display device 10 reads music data from a memory with a concealed area, for example, eSD 304B1 according to the instruction of the decoding engine software, and stores the data in the memory. The central information display device 10 reads and decodes the music data stored in the memory according to the instruction of the decoding engine software, then displays an image on LCD 101, reproduces a sound from a loudspeaker, and thus achieves the AV function.

In the case where the individual functional device for one-seg feature extension is attached to the extension device 20, the central information display device 10 identifies the individual functional device, and reads and executes one-seg application software which is application software according to the above-described flow of Figure 6.

The central information display device 10 generates video signals and sound signals from the signals from one-seg module 306 according to the instruction of the one-seg application software, then displays an image on the LCD 101, reproduces a sound from a loudspeaker, and thus achieves the television receiving function.

As described above, the in-vehicle display device and the individual functional device of the present embodiment includes the central information display device 10, the extension device 20, and the individual functional device 30. Thus, due to the configuration that the central information display device 10 is formed separately from the extension device 20, the price of the central information display device 10 can be set low, providing the effect that a user can select and extend a needed function.

### [Second Embodiment]

Subsequently, the second embodiment of the in-vehicle display device of the present invention is described. In the present embodiment, because the configuration and operation of the individual functional device 30 is similar to those in the first embodiment, the description is omitted.

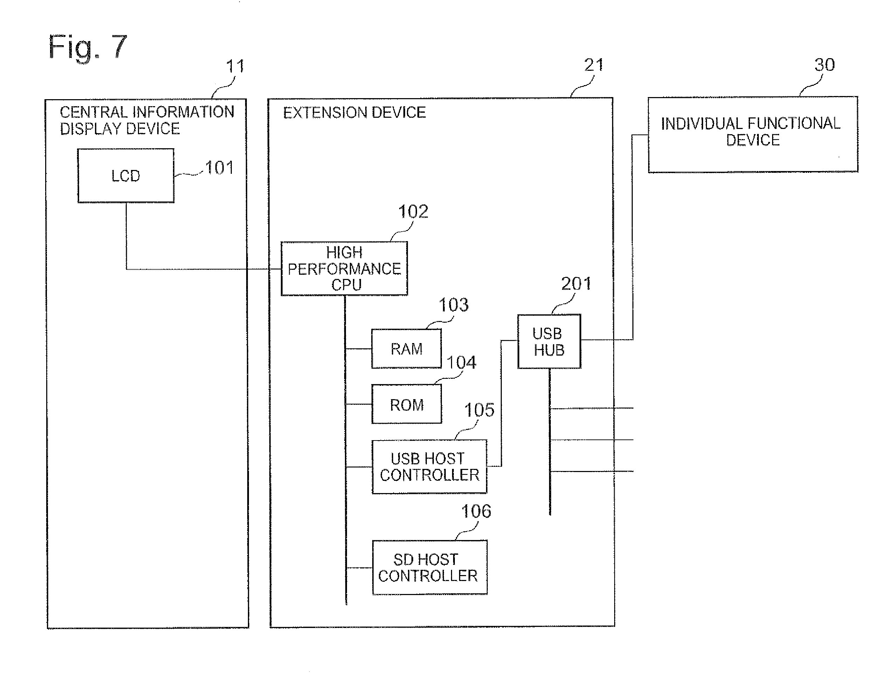

Figure 7 is a configuration diagram schematically showing the in-vehicle display device of the present embodiment. As shown in Figure 7, the in-vehicle display device of the present embodiment includes a central information display device 11, an extension device 21, and an individual functional device 30.

The central information display device 10 may be previously incorporated into the front panel of e.g., an automobile, or may be constructed as a separate body and then later installed in e.g., an automobile. The central information display device 11 includes an LCD 101. The LCD 101 inputs RGB signals from a high performance CPU 102 of the extension device 21, and displays an image on a display screen. The LCD 101 includes a touch panel and an input from the touch panel is inputted to the high performance CPU 102 of the extension device 21.

The extension device 21 includes a high performance CPU 102, a RAM 103 and a ROM 104 as storage devices, a data communication controller, e.g., a USB host controller 105, for controlling USE (Universal Serial Bus) which is data communication interface, an SD host controller 106 for controlling a copyright protected SD memory card, and a HUB, e.g., USB HUB201.

The high performance CPU 102 has the capability of executing various types of application of the individual functional device 30. The RAM 103 can use SDRAM. The ROM 104 can use Flash ROM. The USB host controller 105 may be a controller for data communication interface other than USB. The USB HUB201 is connected to USB host controller 105. USB HUB201 includes multiple HUB ports. The extension device 21 may be integrally formed with, or separately formed from the central information display device 11.

Because the operation of the extension device 21 in the present embodiment is similar to that of the central information display device 10 in the first embodiment, thus description is given by using Figure 6.

As shown in Figure 6, in step S101, the extension device 21 determines whether a new connection is provided to the USB port. In the case where the extension device 21 recognizes a new connection, the process proceeds to step S102, otherwise returns to START.

In step S102, the extension device 21 reads MK (medium key) of MKB (medium key block) area from eSD of the individual functional device 30.

In step S103, it is determined whether MK and a predetermined value coincide with each other. In the case where they do not coincide with each other, the individual functional device 30 is not identified. In the case where they coincide with each other, the process proceeds to step S104.

In step S104, the extension device 21 reads application software from eSD of the individual functional device 30, and application software, compliant with the SD standard is combined and executed.

Hereinafter, the operation for each individual functional device 30 is described. In the case where the individual functional device for navigation function extension is attached to the extension device 21, according to the above-described flow of Figure 6, the extension device 21 identifies the individual functional device, and reads and executes navigation engine software which is application software.

The extension device 21 reads positional information from GPS antenna module 301, reads the map data from eSD 302B1, and stores them in a memory. The extension device 21 executes the navigation engine software, reads the positional information and map data which have been stored in the memory according to the instruction from the navigation engine software, and thus achieves the navigation function by displaying an image on the LCD 101 of the central information display device 11.

The integrated navigation module 303 also operates according to the above operation.

In the case where the AV module 304 is attached to the extension device 21, according to the above-described flow of Figure 6, the extension device 21 identifies the individual functional device, and reads and executes decoding engine software which is application software.

The extension device 21 reads music data from eSD 304B1 and stores the data in the memory according to the instruction of the decoding engine software. The extension device 21 reads and decodes the music data stored in the memory according to the instruction of the decoding engine software, then displays an image on the LCD 101 of the central information display device 11, reproduces a sound from a loudspeaker, and thus achieves the AV function.

In the case where the individual functional device for one-seg feature extension is attached to the extension device 21, according to the above-described flow of Figure 6, the extension device 21 identifies the individual functional device, and reads and executes one-seg application software which is application software.

The extension device 21 generates video signals and sound signals from the signals from one-seg module 306 according to the instruction of the one-seg application software, then displays an image on the LCD 101 of the central information display device 11, and reproduces a sound from a loudspeaker, and thus achieves the television receiving function.

As described above, in the in-vehicle display device of the present embodiment, the central information display device 11 includes the LCD 101, and the extension device 21 includes primary components such as a high performance CPU 102. Accordingly, the manufacturing cost of the central information display device 11 is reduced, providing the effect that the economic burden to the users who do not want extended function can be limited to the minimum.

### [Third Embodiment]

Subsequently, the third embodiment of the in-vehicle display device of the present invention is described. In the present embodiment, because the configuration and operation of the central information display device 11 is similar to those in the second embodiment, the description is omitted.

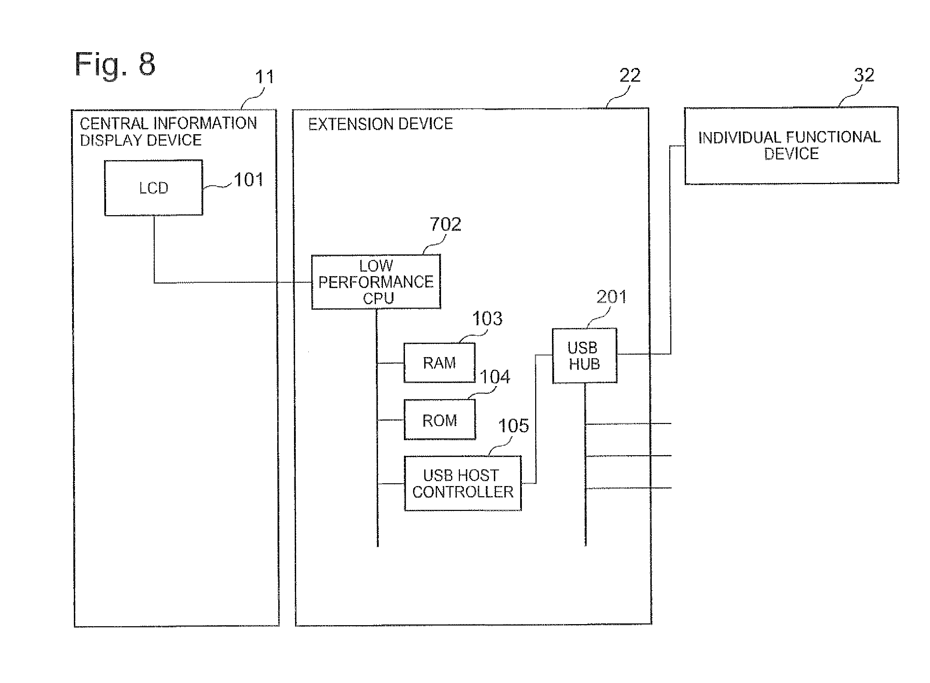

Figure 8 is a configuration diagram schematically showing the in-vehicle display device in the present embodiment. As shown in Figure 8, the in-vehicle display device of the present embodiment includes the central information display device 11, an extension device 22, and an individual functional device 32.

The extension device 22 includes a low performance CPU 702, a RAM 103 and a ROM 104 as storage devices, a data communication controller, e.g., a USB host controller 105 for controlling USB which is data communication interface, and a HUB, e.g., USB HUB201.

The low performance CPU 702 outputs the signals outputted from the individual functional device 32 to the central information display device 11, and outputs the signals inputted from the central information display device 11 to the individual functional device 32, and has the capability to control each unit included in the extension device 22.

RAM 103 can use SDRAM. ROM 104 can use Flash ROM. The USB host controller 105 may be a controller for data communication interface other than USB. The USB HUB201 is connected to the USB host controller 105. The USB HUB201 includes multiple HUB ports. The extension device 22 may be integrally formed with, or separately formed from the central information display device 11.

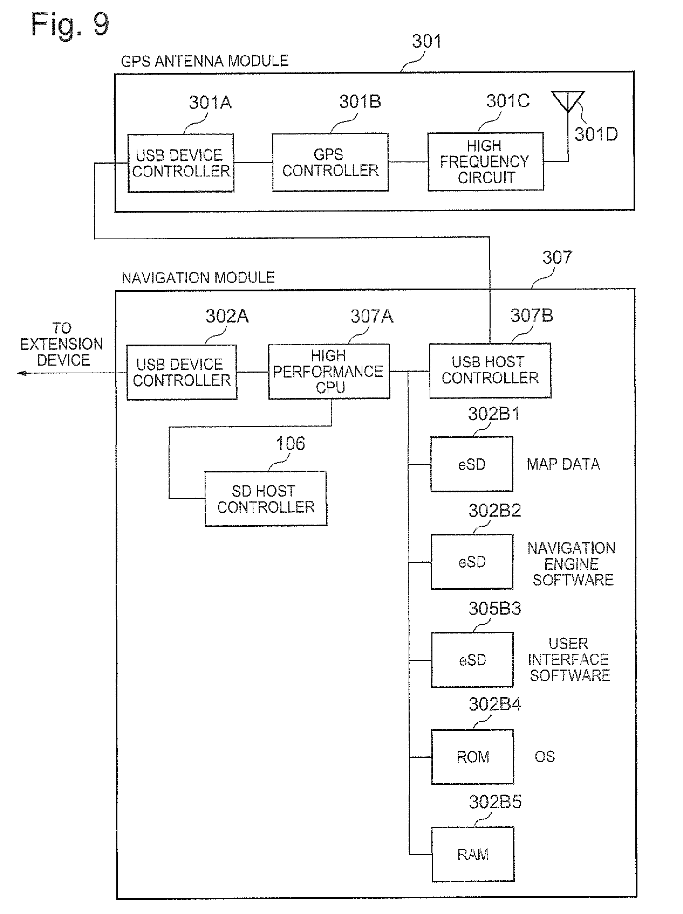

Figure 9 is a block diagram showing an exemplary individual functional device 32 for extending the navigation function of the central information display device 11. As shown in Figure 9, the individual functional device for navigation function extension includes a GPS antenna module 301 and a navigation module 307.

The GPS antenna module 301 includes an antenna 301D for receiving signals, a high frequency circuit 301C connected to the antenna 301D to process the received signals, a GPS controller 301B for generating positional information from the processed signals, and a USB device controller 301A for controlling the operation of the GPS controller 301B and is connected to a data communication controller of the later-described navigation module 307, for example, the USB host controller 307B.

The navigation module 307 includes a high performance CPU 307A having a sufficient capacity to execute application software, an SD host controller 106 connected to the high performance CPU 307A, for controlling a copyright protected SD memory card, and a data communication controller, e.g., a USB host controller 307B for controlling USB which is data communication interface.

The navigation module 307 further includes eSD 302B1 as a storage device for storing map data i.e., data related to map, eSD 302B2 as a storage device for storing navigation engine software, i.e., application software for executing navigation, eSD 305B3 as a storage device for storing user interface software that serves as an interface between a user and the individual functional device for navigation function extension, ROM 302B4 as a storage device for storing OS (Operation System), and RAM 302B5 as a storage device.

Although a memory with multiple concealed areas, for example, eSD, is shown in Figure 9, a configuration can be made such that the navigation module 307 includes only one eSD, which stores map data, navigation engine software, and user interface software.

The navigation module 307 further includes a USB device controller 302A which controls those units included in the navigation module 307, and connects the units to USB HUB201 of the extension device 22.

In the individual functional device for navigation function extension, the GPS antenna module 301 and the navigation module 307 are separately formed. Accordingly, the effect is achieved that the size of each module can be reduced.

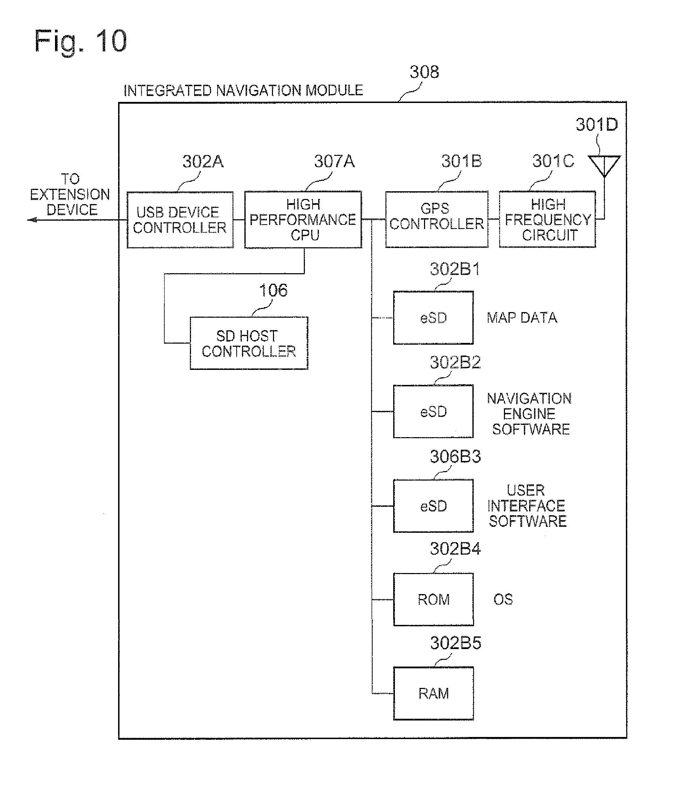

Figure 10 is a block diagram showing the configuration of an integrated navigation module 308 as an integrated individual fractional device for navigation function extension. As shown in Figure 10, the integrated navigation module 308 as a navigation module having the GPS antenna module includes a high performance CPU 307A having a sufficient capacity to execute application software, and an SD host controller 106 connected to the high performance CPU 307A, for controlling a copyright protected SD memory card.

The integrated navigation module 308 further includes an antenna 301D, a high frequency circuit 301C connected to the antenna 301D to process received signals, a GPS controller 301B for generating positional information from the signals processed by the high frequency circuit 301C.

The integrated navigation module 308 further includes eSD 302B1 as a storage device for storing map data i.e., data related to map, eSD 302B2 as a storage device for storing navigation engine software, i.e., application software for executing navigation, eSD 305B3 as a storage device for storing user interface software that serves as an interface between a user and the individual functional device for navigation function extension, ROM 302B4 as a storage device for storing OS, and RAM 302B5 as a storage device.

Although a memory with multiple concealed areas, for example, eSD, is shown in Figure 10, a configuration can be made such that the integrated navigation module 308 includes only one eSD, which stores map data, navigation engine software, and user interface software.

The integrated navigation module 308 further includes a USB device controller 302A which controls those units included in the navigation module 307 and connects the units to USB HUB201 of the extension device 22.

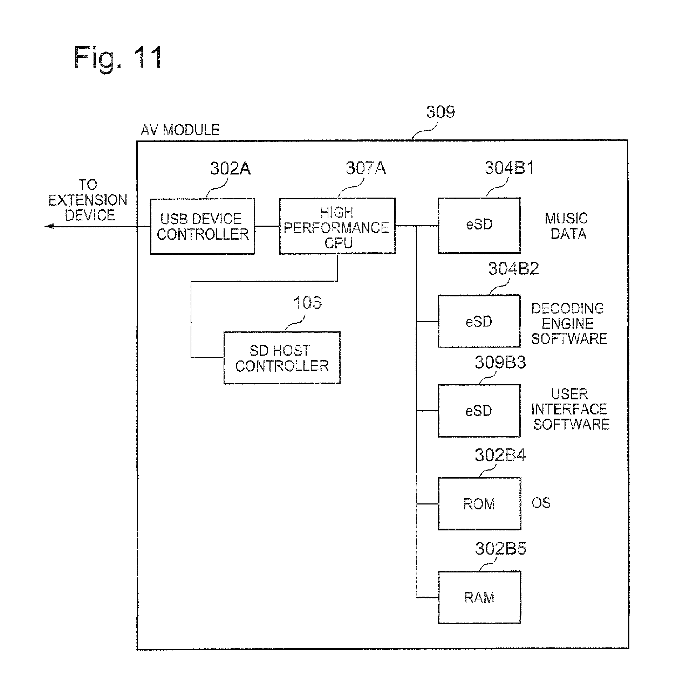

Figure 11 is a block diagram showing the configuration of an AV module 309 as the individual functional device 32 for extending the audiovisual function of the central information display device 11. As shown in Figure 11, the AV module 309 includes a high performance CPU 307A having a sufficient capacity to execute application software, and an SD host controller 106 connected to the high performance CPU 307A, for controlling a copyright protected SD memory card.

The AV module 309 further includes a memory with a concealed area, e.g., eSD 304B1, for storing music data such as music or video, a memory with a concealed area, e.g., eSD 304B2, for storing decoding engine software i.e., software which decodes music data, a memory with a concealed area, e.g., eSD 304B3, as a storage device for storing the user interface software that serves as an interface between a user and the AV module 309, ROM 302B4 as a storage device for storing OS, and RAM 302B5 as a storage device.

Although a memory with multiple concealed areas, for example, eSD, is shown in Figure 11, a configuration can be made such that the AV module 309 includes a memory with a single concealed area, e.g., eSD that stores music data, decoding engine software, and user interface software.

The AV module 309 further includes a USB device controller 302A which controls those units included in the AV module 309 and connects the units to the USB HUB201 of the extension device 22.

Also, a configuration can be made such that the AV module 309 is connected to an upper-level device such as a personal computer or an audio device so as to store music data and decoding engine software from these upper-level devices, thus the effect is achieved that any music can be enjoyed in the vehicle.

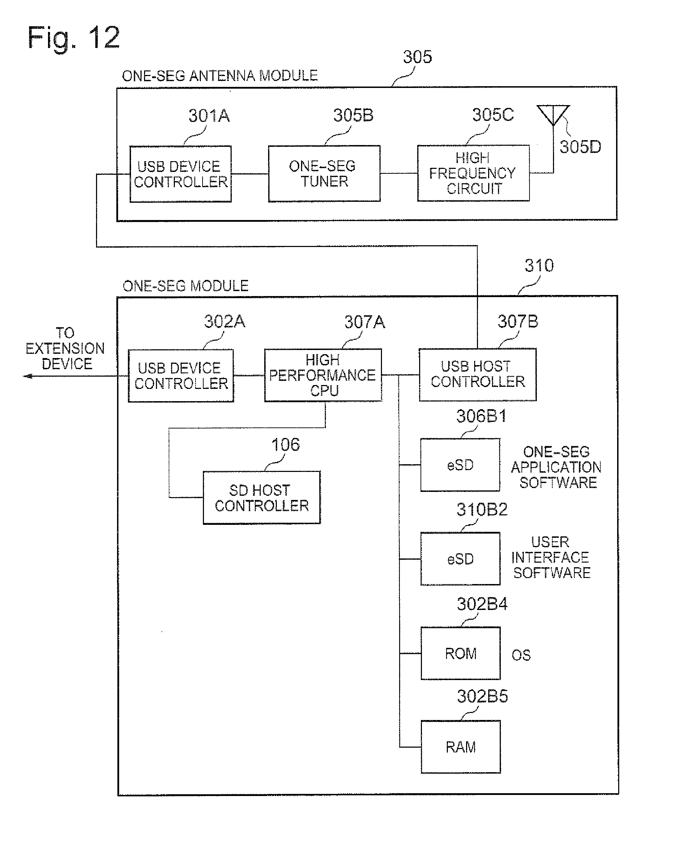

Figure 12 is a block diagram showing the configuration of an individual functional device for one-seg feature extension as the individual functional device 32 for extending the television receiving function of the central information display device 11. As shown in Figure 12, the individual functional device for one-seg feature extension includes one-seg antenna module 305 and one-seg module 310.

The one-seg antenna module 305 includes an antenna 305D for receiving television signals, a high frequency circuit 305C for processing the received signals, one-seg tuner 305B for selecting television signals of an arbitrary channel from the processed high frequency signals, and USB device controller 301A which controls one-seg tuner 305B and is connected to USB host controller 307B of the later described one-seg module 310.

The one-seg module 310 includes a high performance CPU 307A having a sufficient capacity to execute application software, an SD host controller 106 connected to the high performance CPU 307A, for controlling a copyright protected SD memory card, and a data communication controller, e.g., a USB host controller 307B for controlling USB which is data communication interlace.

The one-seg module 310 includes a memory with a concealed area, e.g., eSD 306B1 as a storage device to store one-seg application software for executing the function of generating the image data to be displayed on the LCD 101 and the voice data to be reproduced through a loudspeaker from the television signals in a channel selected by one-seg tuner 305B; eSD 310B2 as a storage device for storing user interface software which serves as an interface between a user and the individual functional device for one-seg feature extension; and ROM 302B4 as a storage device for storing OS, and RAM 302B5 as a storage device.

Although a memory with multiple concealed areas, for example, eSD, is shown in Figure 12, a configuration can be made such that one-seg module 310 includes only one eSD, which stores one-seg application software and user interface software.

The one-seg module 310 further includes a USB device controller 302A which controls those units included in the one-seg module 310 and connects the units to the USB HUB201 of the extension device 22.

The individual functional device for one-seg feature extension provides an effect that users can enjoy television images in a vehicle.

Because the operation of the extension device 22 in the present embodiment is similar to that of the central information display device 10 in the first embodiment, thus description is given by using Figure 6.

As shown in Figure 6, in step S101, the extension device 22 determines whether a new connection is provided to the USB port. In the case where the extension device 22 recognizes a new connection, the process proceeds to step S102, otherwise returns to START.

In step S102, the extension device 22 reads MK (medium key) of MKB (medium key block) area from eSD of the individual functional device 32.

In step S103, it is determined whether or not MK and a predetermined value coincide with each other. In the case where they do not coincide with each other, the individual functional device 32 is not identified. In the case where they coincide with each other, the process proceeds to step S104.

In step S104, the extension device 22 reads application software from eSD of the individual functional device 32, and application software compliant with the SD standard is combined and executed.

Hereinafter, the operation for each individual functional device 32 is described. In the case where the individual functional device for navigation function extension is attached to the extension device 22, the navigation module 307 reads OS from ROM 302B4, and expands it in RAM 302B5. Also, the navigation module 307 reads navigation engine software from a memory with a concealed area, for example, eSD 302B2 and expands it in RAM 302B5.

According to the above-described flow of Figure 6, the extension device 22 identifies the individual functional device, and reads and executes navigation engine software which is application software. The navigation module 307 executes navigation software by the high performance CPU 307A.

The navigation module 307 reads positional information from GPS antenna module 301, reads the map data from eSD 302B1, and stores them in a memory. The navigation module 307 executes the navigation engine software, reads the positional information and map data which have been stored in the memory according to the instruction from the navigation engine software, thus achieves the navigation function by displaying an image on the LCD 101 of the central information display device 11.

The integrated navigation module 308 also operates according to the above operation.

In the case where the AV module 309 is attached to the extension device 22, the AV module 309 reads OS from ROM 302B4, and expands it in RAM 302B5. The AV module 309 reads decoding engine software from eSD 304B2, and expands it in RAM 30285.

According to the above-described flow of Figure 6, the extension device 22 identifies the individual functional device, and reads and executes decoding engine software which is application software. The AV module 309 executes the decoding engine software by the high performance CPU 307A.

According to the instruction of the decoding engine software, the AV module 309 reads music data from eSD 304B1 and stores it in the memory. The AV module 309 reads and decodes the music data stored in the memory according to the instruction of the decoding engine software, then displays an image on the LCD 101 of the central information display device 11, reproduces a sound from a loudspeaker, thus achieves the AV function.

In the case where the individual functional device for one-seg feature extension is attached to the extension device 22, the one-seg module 310 reads OS from ROM 302B4, and expands it in RAM 302B5. Also, one-seg module 310 reads one-seg application software from eSD 306B1, and develops it in RAM 302 B5.

According to the above-described flow of Figure 6, the extension device 22 identifies the individual functional device, and reads and executes navigation engine software which is application software. The one-seg module 310 executes one-seg application software by the high performance CPU 307A.

The one-seg module 310 generates video signals and sound signals from the signals from one-seg module 305 according to the instruction of the one-seg application software, then displays an image on the LCD 101 of the central information display device 11, and reproduces a sound from a loudspeaker, thus achieves the television receiving function.

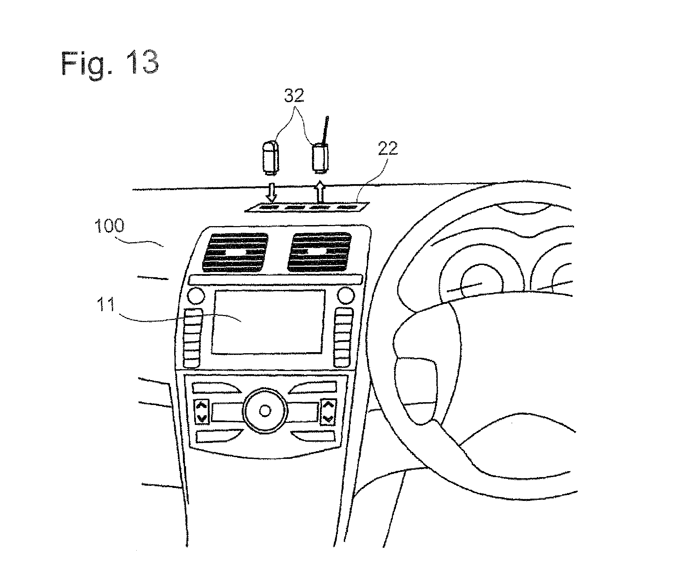

Next, exemplary installation of the in-vehicle display device and the individual functional device of the present embodiment in an automobile is described. Figure 13 is a diagram showing an exemplary arrangement of the extension device 22 near a windshield. As shown in Figure 13, the central information display device 11 is arranged in the front of the front panel 100.

The extension device 22 is installed in the upper surface of the front panel, i.e., the surface opposed to the windshield of the front panel 100.

By this arrangement, the effect is achieved that the individual functional device 32 which receives radio waves, such as GPS antenna module 301, or one-seg antenna module 305 tends to receive radio waves.

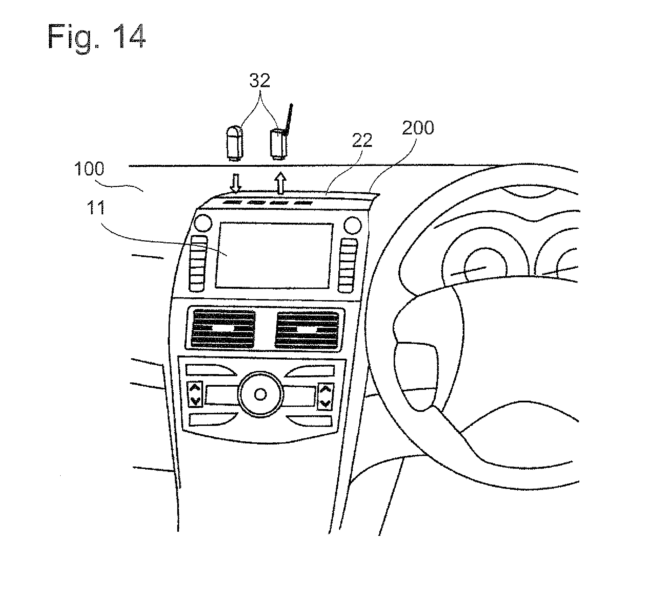

Figure 14 is a diagram showing an exemplary arrangement of the extension device 22 on the top of the central information display device 11. As shown in Figure 14, the central information display device 11 is arranged in the front of the front panel 100.

The extension device 22 is arranged on the top of the central information display device 11, i.e., at a position above the LCD 101 and within the console 200.

By this arrangement, the effect is achieved that the individual functional device 32 tends to receive radio waves, and also assembly of the console is made simple.

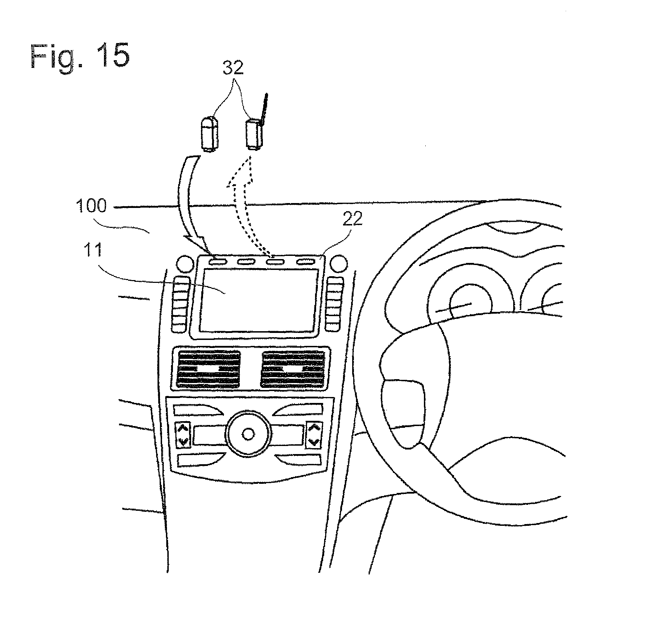

Figure 15 is a diagram showing an exemplary integrated configuration of the central information display device 11 and the extension device 22. As shown in Figure 15, the central information display device 11 is arranged in the front of the front panel 100.

The extension device 22 is integrally formed with the central information display device 11. The extension device 22 is arranged on the surface on which the LCD 101 of the central information display device 11 lies, or is preferably arranged above the LCD 101.

By this arrangement, the effect is achieved that a user can easily insert and extract the individual functional device 32.

Next, a device authentication system for operating only permitted individual functional device in the present embodiment is described in detail.

An individual functional device connectable to an in-vehicle display device may be illegally manufactured. For example, a device with illegally-copied content, or a device causing in-vehicle display device to break may appear on the market.

Now, a system which determines whether or not a device should be connected to an in-vehicle display device, or so-called device authentication system is needed.

Conventionally, a specific integrated circuit for authenticating a device has been manufactured, and mutual authentication has been verified using the circuit in practice, however, manufacturing the specific integrated circuit has a problem in that the manufacturing cost is increased.

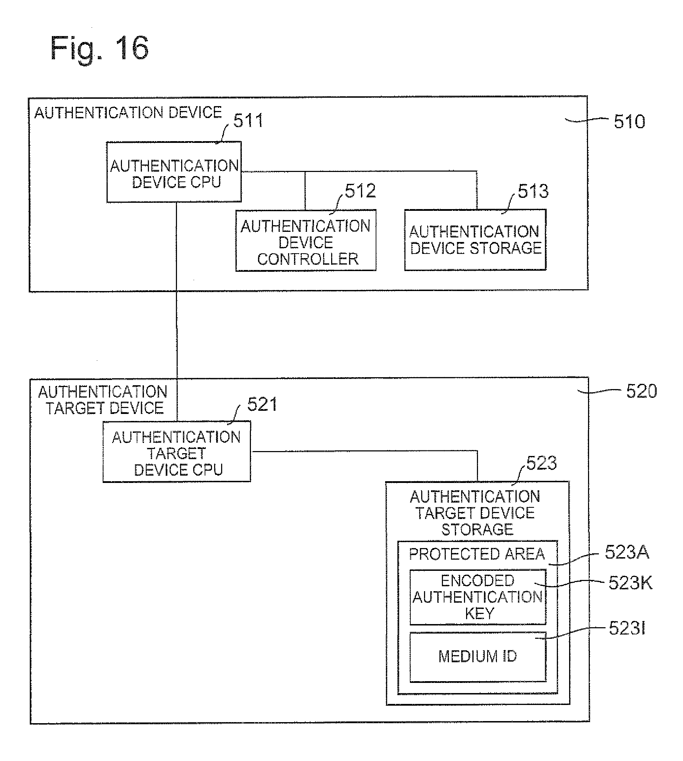

Figure 16 is a schematic diagram showing the configuration of the first device authentication system. As shown in Figure 16, the device authentication system includes an authentication device 510 that authenticates a device connected, and an authentication target device 520 that is to be authenticated.

The authentication device 510 that authenticates a device connected may be an in-vehicle display device including an extension device which is integrally formed with a central information display device, or may be implemented by a central information display device or an extension device. The authentication target device that is to be authenticated is implemented by an individual functional device.

Hereinafter, description is given under the assumption that the in-vehicle display device includes an extension device which is integrally formed with the central information display device, or the central information display device is an authentication device, and the individual functional device is an authentication target device.

The authentication device 510 includes an authentication device storage 513 as a storage device, an authentication device controller 512 having the function of decoding an encoded data by an authentication key which is a predetermined data, and an authentication device CPU 511 which performs computation processing.

The authentication device controller 512 has the function of reading stored data from an authentication target device storage 523, which is a storage device of the connected authentication target device 520.

The authentication device storage 513 provides a memory area needed for the authentication device CPU 511 and the authentication device controller 512 to operate, as well as stores an encoded code which is data for decoding test, correct code which is the data obtained when the encoded code is decoded with proper authentication key, and a manufacturer authentication key which is a predetermined data for encoding. Here, the encoded code and the correct code are collectively referred to as data code, and the data may be image data, voice data, or simply a binary sequence data.

The authentication target device 520 includes the authentication target device 523 and an authentication target device CPU 521, which is a computation unit.

The authentication target device storage 523 provides a memory area needed for the authentication target device CPU 521 to operate. In a protected area 523A which is an area to which the access is restricted, the authentication target device storage 523 stores a medium ID 5231 which is a specific ID to the authentication target device storage 523, and an encoded authentication key 523K, which is an authentication key encoded by the medium ID 5231 and the manufacturer authentication key.

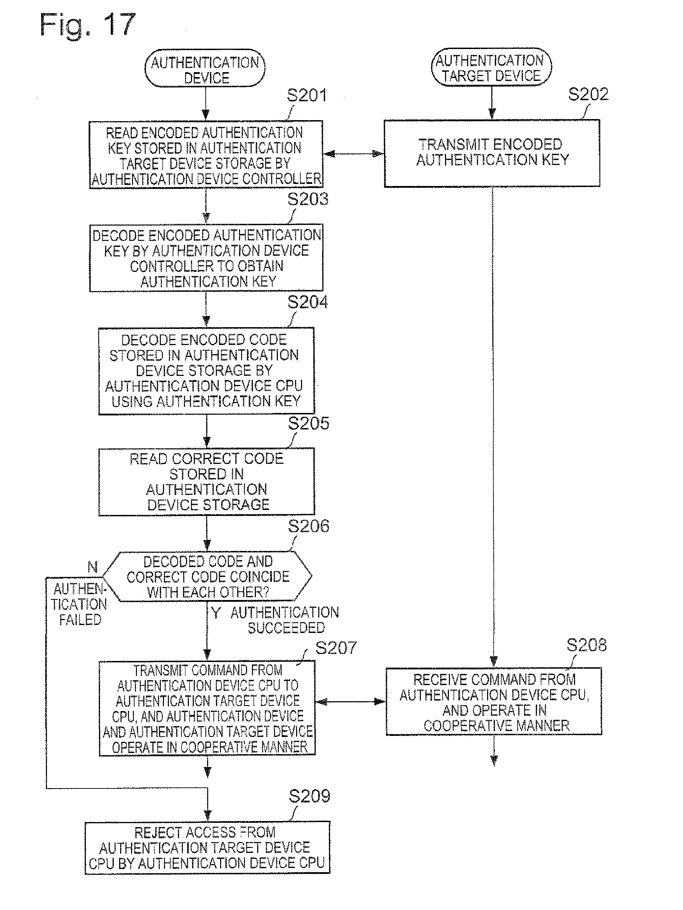

Figure 17 is a flowchart showing the operation of the first device authentication system. As shown in Figure 17, in step S201, the authentication device 510 reads the encoded authentication key 523K stored in the authentication target device storage 523 by the authentication device controller 512. That is to say, a command read from the authentication device controller 512 is transmitted to the authentication target device 520.

In step S202, the authentication target device 520 transmits the encoded authentication key 523K to the authentication device 510. At this time, the medium ID 523I is also transmitted to the authentication device 510 simultaneously.

In step S203, with the authentication device controller 512, the authentication device 510 decodes the encoded authentication key 523K by the manufacturer authentication key and the medium ID 5231, then obtains the authentication key.

The medium ID 5231 is specific to the medium, and furthermore, access to the medium is restricted, thus even if the entire authentication target device 520 is replicated, or the authentication target device storage 523 is replicated, the medium ID 523I cannot be replicated. Consequently, illegally-copied encoded authentication key 523K cannot be correctly decoded.

In step S204, the authentication device 510 decodes the encoded code stored in the authentication device storage 513 by the authentication device CPU 511 using the authentication key, and obtains the decoded code.

In step S205, the authentication device 510 reads correct code from the authentication device storage 513.

In step S206, the authentication device 510 determines whether or not the decoded code and correct code coincide with each other. In the case where the decoded code and correct code do not coincide with each other, the authentication device 510 determines that the authentication is failed, and the authentication flow proceeds to step S209, otherwise the authentication device 510 determines that the authentication is succeeded, and the authentication flow proceeds to step S207.

In step S207, the authentication device 510 transmits various commands from the authentication device CPU 511 to the authentication target device CPU 521. In step S208, the authentication target device 520 receives those commands from the authentication device 510, and subsequently the authentication device 510 and the authentication target device 520 operate by cooperating with each other.

In step S209, the authentication device 510 rejects access from the authentication target device CPU 521 by the authentication device CPU 511.

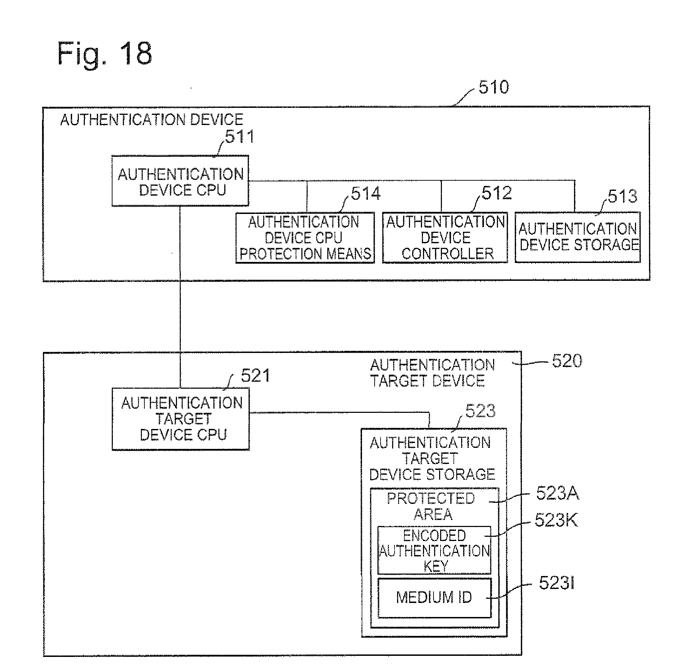

Figure 18 is a diagram showing a modification of the first device authentication system. As shown in Figure 18, a configuration can be made such that the authentication device 510 further includes an authentication device CPU protection means 514.

The authentication device CPU protection means 514 may be configured with hardware, or with software, or with both hardware and software. The authentication device CPU protection means 514 may have a mechanism, for example, such that a program to be executed in the authentication device CPU 511 is treated in an encoded format until actual execution of the program, and minimum necessary portions of the program is safely decoded at the time of execution of the program for further processing.

The authentication device CPU protection means 514 is provided in order to decode the encoded authentication key 523K, to verify that the decoded code and correct code coincide with each other, and to protect related information safely.

As described above, in the device authentication system of the present embodiment, the authentication device 510 includes the authentication device CPU 511, the authentication device controller 512, and the authentication device storage 513; the authentication device storage 513 stores the encoded code, correct code, and the manufacturer authentication key; the authentication target device 520 includes the authentication target device CPU 521 and the authentication target device storage 523; and the authentication target device storage 523 stores the medium ID 523I, and the encoded authentication key 523K in the protected area 523A. With the authentication device controller 512, the authentication device 510 decodes the encoded authentication key 523K by the manufacturer authentication key and the medium ID 5231 to obtain the authentication key. The authentication device 510 then decodes the encoded code using the authentication key and compares the decoded code with correct code to verify the authentication target device.

Accordingly, new hardware is not required to be created, thus achieving the effect that an inexpensive device authentication system capable of accurately authenticating an authentication target device can be provided.

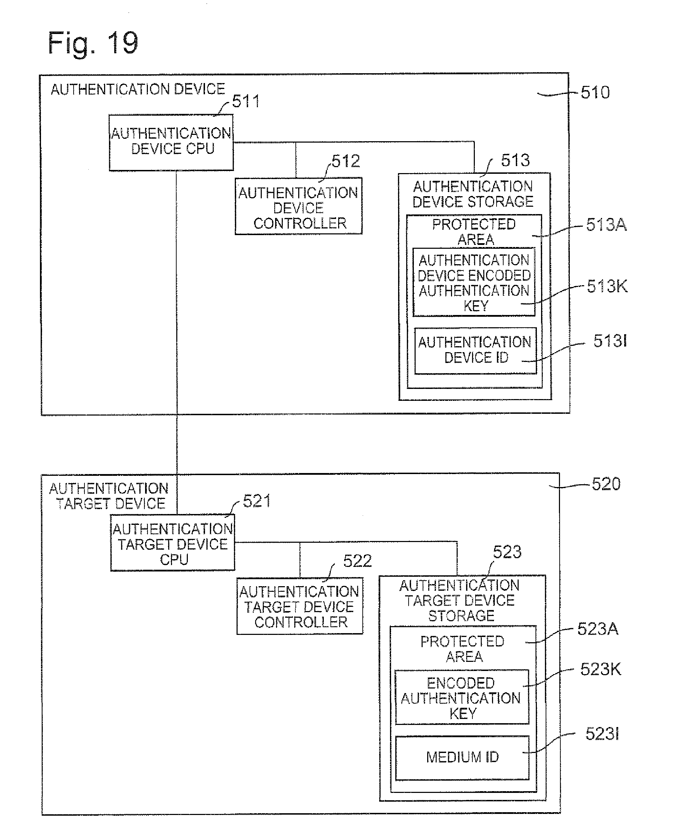

Figure 19 is a schematic diagram showing the configuration of the second device authentication system. As shown in Figure 19, the device authentication system includes an authentication device 510 that authenticates a device connected, and an authentication target device 520 that is to be authenticated.

The authentication device 510 includes an authentication device storage 513 as a storage device, an authentication device controller 512 having the function of decoding an encoded data by an authentication key which is a predetermined data, and an authentication device CPU 511 which performs computation processing.

The authentication device controller 512 has the function of reading stored data from an authentication target device storage 523, which is a storage device of the connected authentication target device 520.

The authentication device storage 513 provides a memory area needed for the authentication device CPU 511 and the authentication device controller 512 to operate, as well as stores an encoded code which is data for decoding test, correct code which is the data obtained when the encoded code is decoded with proper authentication key, and a manufacturer authentication key which is a predetermined data for encoding.

In a protected area 513A which is an area to which the access is restricted, the authentication device storage 513 stores an authentication device ID 513I which is a specific ID to the authentication device storage 513, and an authentication device encoded authentication key 513K which is an authentication key encoded by the authentication device ID 513I and an authentication device manufacturer authentication key which is data for predetermined encoding.

The authentication target device 520 includes the authentication target device storage 523, the authentication target device CPU 521 which is a computation unit, and an authentication target device controller 522 having the function of decoding encoded data by an authentication key.

The authentication device controller 522 has the function of reading stored data from the authentication target device storage 513, which is a storage device of the connected authentication target device 510.

The authentication target device storage 523 provides a memory area needed for the authentication target device CPU 521 and the authentication target device controller 522 to operate. In a protected area 523A which is an area to which the access is restricted, the authentication target device storage 523 stores a medium ID 523I which is a specific ID to the authentication target device storage 523, and an encoded authentication key 523K, which is an authentication key encoded by the medium ID and the manufacturer authentication key.

The authentication target device storage 523 stores an authentication device encoded code which is data for decoding test, and an authentication device correct code which is the data obtained when the authentication device encoded code is decoded with proper authentication key, and an authentication device manufacturer authentication key.

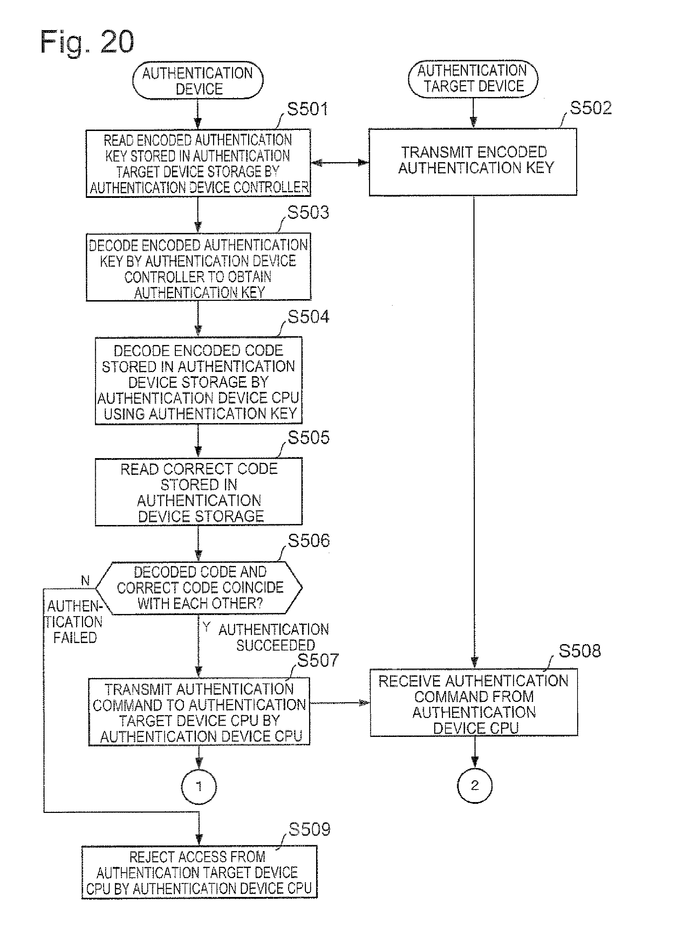

Figure 20 is a flowchart showing the operation of the second device authentication system. As shown in Figure 20, in step S501, the authentication device 510 reads the encoded authentication key 523K stored in the authentication target device storage 523 by the authentication device controller 512. That is to say, a command read from the authentication device controller 512 is transmitted to the authentication target device 520.

In step S502, the authentication target device 520 transmits the encoded authentication key 523K to the authentication device 510. At this time, the medium ID 523I is also transmitted to the authentication device 510 simultaneously.

In step S503, with the authentication device controller 512, the authentication device 510 decodes the encoded authentication key 523K by the manufacturer authentication key and the medium ID 523I, then obtains the authentication key.

The medium ID 5231 is specific to the medium, and furthermore, access to the medium is restricted, thus even if the entire authentication target device 520 is replicated, or the authentication target device storage 523 is replicated, the medium ID 5231 cannot be replicated. Consequently, illegally-copied encoded authentication key 523K cannot be correctly decoded.

In step S504, the authentication device 510 decodes the encoded code stored in the authentication device storage 513 by the authentication device CPU 511 using the authentication key, and obtains the decoded code.

In step S505, the authentication device 510 reads correct code from the authentication device storage 513.

In step S506, the authentication device 510 determines whether or not the decoded code and correct code coincide with each other. In the case where the decoded code and correct code do not coincide with each other, the authentication device 510 determines that the authentication is failed, and the authentication flow proceeds to step S509, otherwise the authentication device 510 determines that the authentication is succeeded, and the authentication flow proceeds to step S507.

In step S507, the authentication device 510 transmits an authentication command to authenticate a device from the authentication device CPU 511 to the authentication target device CPU 521. In step S508, the authentication target device 520 receives the authentication command from the authentication device 510.

In step S509, the authentication device 510 rejects access from the authentication target device CPU 521 by the authentication device CPU 511.

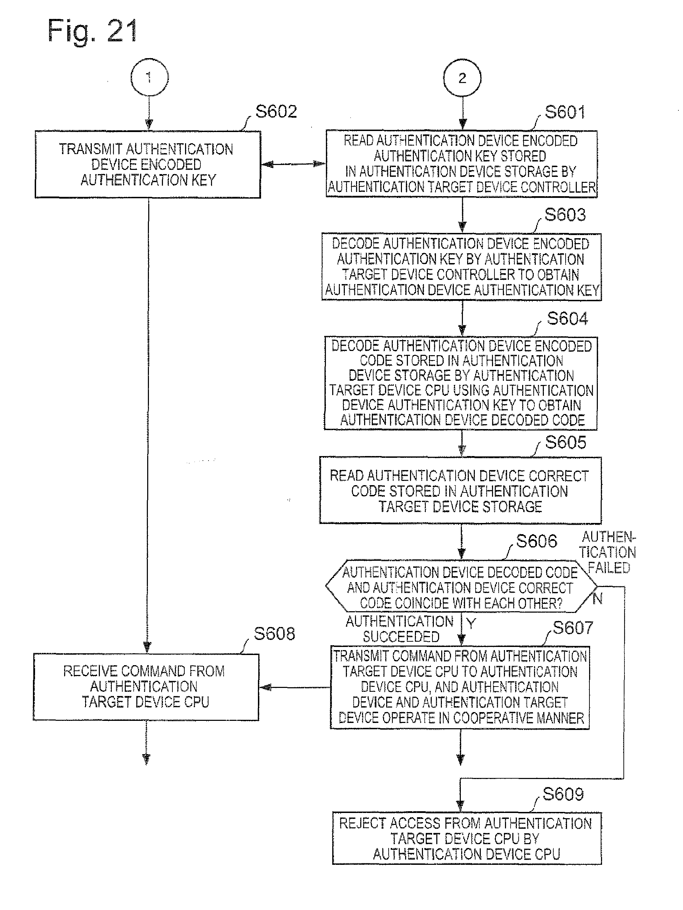

Figure 21 is a continued flowchart showing the operation of the second device authentication system. As shown in Figure 21, in step S601*,* the authentication target device 520 reads the authentication device encoded authentication key 513K stored in the authentication device storage 513 by the authentication target device controller 522. That is to say, a command read from the authentication target device controller 522 is transmitted to the authentication device 510.

In step S602, the authentication device 510 transmits the authentication device encoded authentication key 513K to the authentication target device 520. At this time, the authentication device ID 513I is also transmitted to the authentication target device 520 simultaneously.

In step S603, with the authentication target device controller 522, the authentication target device 520 decodes the authentication device encoded authentication key 513K by the authentication device manufacturer authentication key and the authentication device ID 513I, then obtains an authentication device authentication key.

The authentication device ID 513I is specific to the authentication device, and furthermore, access to the authentication device is restricted, thus even if the entire authentication device 510 is replicated, or the authentication device storage 513 is replicated, the authentication device ID 513I cannot be replicated. Consequently, illegally-copied authentication device encoded authentication key 513K cannot be correctly decoded.

In step S604, the authentication target device 520 decodes the authentication device encoded code stored in the authentication target device storage 523 by the authentication target device CPU 521 using the authentication device authentication key, and obtains the authentication device decoded code.

In step S605, the authentication target device 520 reads the authentication device correct code from the authentication target device storage 523.

In step S606, the authentication target device 520 determines whether or not the authentication device decoded code and the authentication device correct code coincide with each other. In the case where the authentication device decoded code and the authentication device correct code do not coincide with each other, the authentication target device 520 determines that the authentication is failed, and the authentication flow proceeds to step S609, otherwise the authentication target device 520 determines that the authentication is succeeded, and the authentication flow proceeds to step S607.

In step S607, the authentication device 510 transmits various commands from the authentication target device CPU 521 to the authentication device CPU 511. In step S608, the authentication device 510 receives those commands from the authentication target device 520, and subsequently the authentication device 510 and the authentication target device 520 operate by cooperating with each other.

In step S609, the authentication target device 520 rejects access from the authentication device CPU 511 by the authentication target device CPU 521.

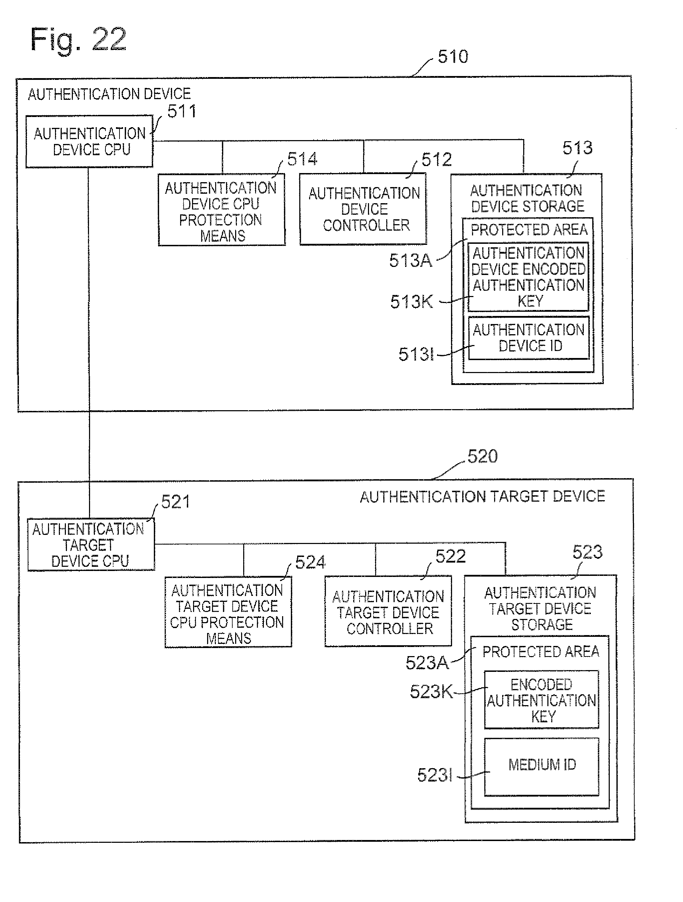

Figure 22 is a diagram showing a modification of the second device authentication system. As shown in Figure 22, in the present embodiment, a configuration can be made such that the authentication device 510 further includes an authentication device CPU protection means 514, and the authentication target device 520 further includes an authentication target device CPU protection means 524.

The authentication device CPU protection means 514 and the authentication target device CPU protection means 524 may be configured with hardware, or with software, or with both hardware and software. The authentication device CPU protection means 514 and the authentication target device CPU protection means 524 may have a mechanism, for example, such that a program to be executed in the authentication device CPU 511 and the authentication target device CPU 521 is treated in an encoded format until actual execution of the program, and minimum necessary portions of the program is safely decoded at the time of execution of the program for further processing.

The authentication device CPU protection means 514 is provided in order to decode the encoded authentication key 523K, and to safely protect the verification between the decoded code and correct code. The authentication target device CPU protection means 524 is provided in order to decode the authentication device encoded authentication key 513K, and to safely protect the verification between the authentication device decoded code and authentication device correct code.

As described above, in the device authentication system, the authentication device 510 includes the authentication device CPU 511, the authentication device controller 512, and the authentication device storage 513; the authentication device storage 513 stores the encoded code, correct code, and the manufacturer authentication key; the protected area 513A stores the authentication device ID 513I, and the authentication device encoded authentication key 513K, which is the authentication key coded by the authentication device ID 513I and the authentication device manufacturer authentication key; the authentication target device 520 includes the authentication target device CPU 52I, the authentication target device controller 522, and the authentication target device storage 523; the authentication target device storage 523 stores the authentication device encoded code, the authentication device correct code, and the authentication device manufacturer authentication key; and the protected area 523A stores the medium ID 523I and the encoded authentication key 523K.

With the authentication device controller 512, the authentication device 510 decodes the encoded authentication key 523K by the manufacturer authentication key and the medium ID 523I to obtain the authentication key. The authentication device 510 then decodes the encoded code using the authentication key and compares the decoded code with correct code to verify the authentication target device.

With the authentication target device controller 522, the authentication target device 520 decodes the authentication device encoded authentication key 513K by the authentication device manufacturer authentication key and the authentication device ID 513I to obtain the authentication device authentication key, then decodes the authentication device encoded code using the authentication device authentication key so that the authentication device is authenticated by comparing the decoded authentication device encoded code with the authentication device correct code.

Accordingly, the effect is achieved that an inexpensive device authentication system capable of strictly authenticating an authentication target device can be provided.

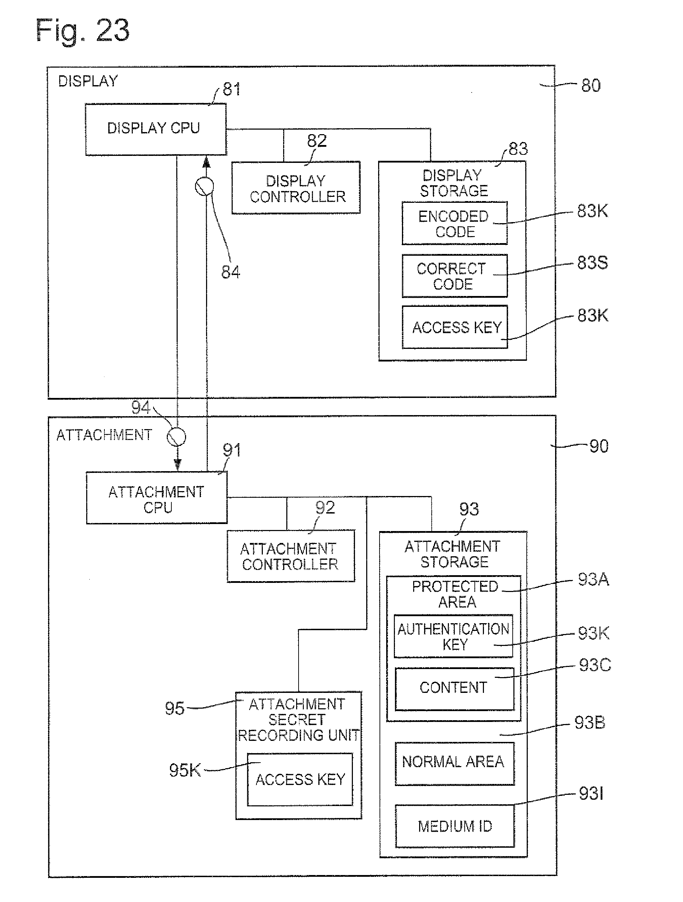

Figure 23 is a schematic diagram showing the configuration of the third device authentication system. As shown in Figure 23, the device authentication system includes a display 80 as a device for reproducing content containing an image such as a video image or a character, and an attachment 90 as a medium for storing the content.

The display 80 includes a display storage 83 as a storage; a display controller 82 having the function of decoding an encoded data by an authentication key which is a predetermined data; a display CPU 81 which performs computation processing; and a switch B84 for switching between ON/OFF of an input signal.

The display controller 82 has the function of reading stored data from an attachment storage 93, which is a storage device of the connected attachment 90.

The display storage 83 provides a memory area needed for the display CPU 81 and the display controller 82 to operate, as well as stores an encoded code 83A which is data for decoding test, correct code 83S which is the data obtained when the encoded code 83A is decoded with proper authentication key, and an access key 83K for accessing a protected area inside the attachment.

The attachment 90 includes an attachment storage 93; an attachment CPU 91 as a computation unit; an attachment controller 92 having the function of decoding content; a switch A94 for switching between ON/OFF of an input signal; and an attachment secret recording unit 95. The attachment secret recording unit 95 has an access key 95K for accessing a protected area 93A inside the attachment storage 93. Although the access key 95K has a value different from that of the access key 83K of the display, the protected area 93A can be accessed by a predetermined processing. For example, the Protected Area in "4C Entity, LLC. "Content Protection, for Recordable Media Specification, SD Memory Card Book, Common Part", Revision 0.961, May 3, 2007, <http://www.4centity.com>" corresponds to the protected area 93A. In order to allow only access-permitted devices to be accessed to their protected area, reading the access key recorded in the display and the attachment from outside is required to be prohibited in the implementation of the devices.

The attachment storage 93 is used to protect and store the content and the authentication key. The attachment storage 93 has a medium ID 93I as an ID specific to the attachment storage 93, a normal area 93B without access restriction, and a protected area 93A as an area to which access is restricted. The protected area stores an authentication key 93K and a content 93C. The authentication key 93K and the content 93C are encoded by respective intermediate keys, and are stored in the normal area 93B. In some cases, the intermediate key is stored in the protected area 93A. In those cases, when the authentication key or the content is retrieved from the protected area using the access key in the following description, respective intermediate keys are read, and encoded authentication key or encoded content written in the normal region is read and decoded so that the authentication key and the content are retrieved. By this method, the effect is achieved that required size of the protected area is reduced.

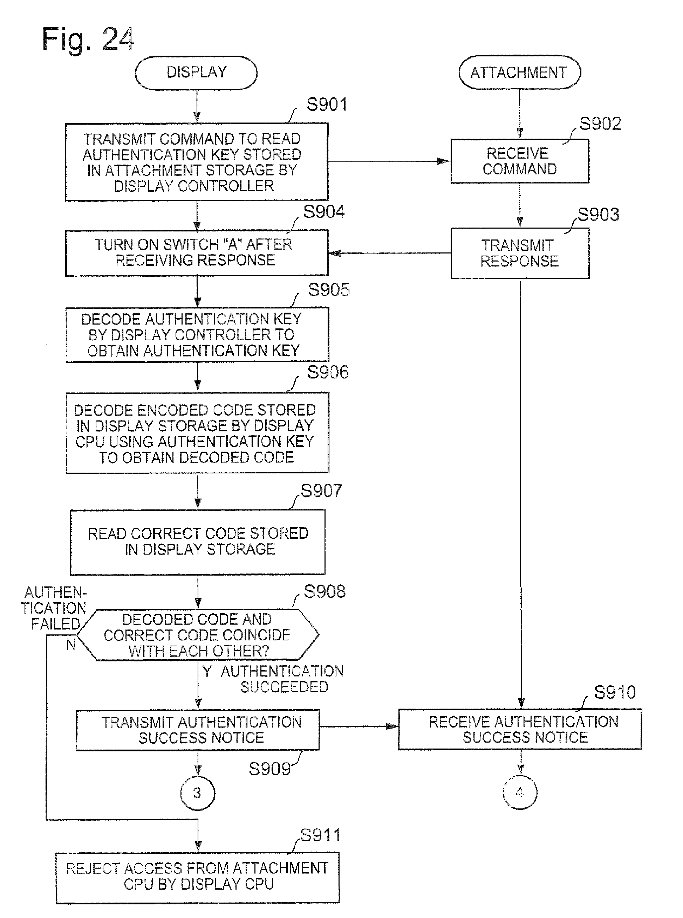

Figure 24 is a flowchart showing the operation of the third device authentication system. As shown in Figure 9, in step 901, in order to read the authentication key 93K stored in the protected area 93A of the attachment storage 93 by the display controller 92, the display 80 transmits some predetermined commands to the attachment 90 for accessing the authentication key 93K. In the case where the access is successful, the attachment 90 transmits a response including the authentication key 93K to the display.

In step 904, the display 80, after receiving the response, turns on the switch A94.

In step 905, the display 80 obtains the authentication key 93K by the display controller 82.

In step S906, the display 80 decodes the encoded code stored in the display storage 83 by the display CPU 81 using the authentication key to obtain the decoded code. The decoded code may be an activating screen of the display 80 or a sound effect reproduced when activating the screen of the display 80.

In step S907, the display 80 reads the correct code stored in the display storage 83.

In step S908, the display 80 determines whether or not the decoded code and the correct code coincide with each other. In the case where the decoded code and the correct code do not coincide with each other, the display 80 determines that the authentication is failed, and the authentication flow proceeds to step S911, otherwise, the display 80 determines that the authentication is successful, and the authentication flow proceeds to step S909. After the decoded code is obtained, some computation using e.g., Hash function may be applied to the decoded code to obtain a value, and the value may be used as the correct code. In this case, the effect is achieved that the size of the correct code can be reduced.

In step S909, the display 80 transmits authentication success to the attachment 90, and attachment 90 receives the authentication success in step S910.

In step S911, the display 80 rejects access from the attachment CPU 91 by the display CPU 81.

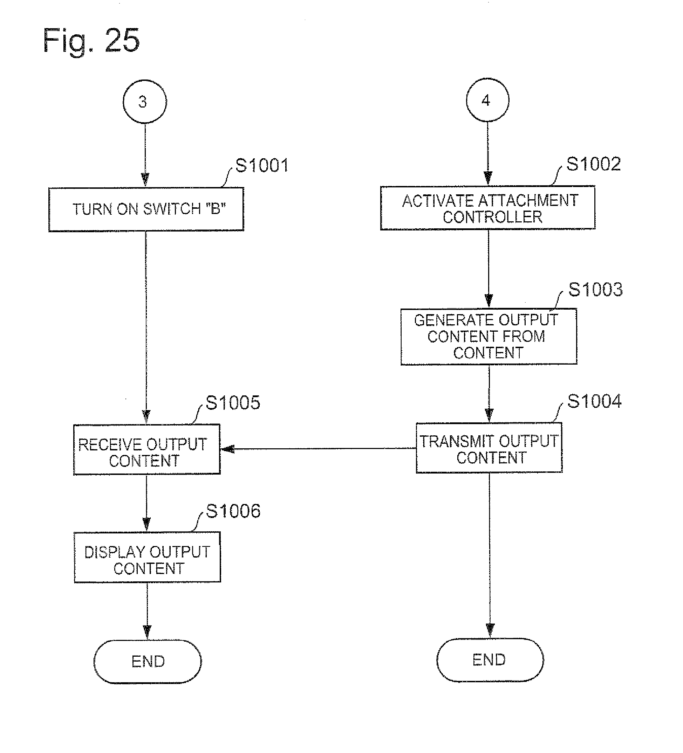

Figure 25 is a continued flowchart showing the operation of the third device authentication system. As shown in Figure 25, in step S1001, the display 80 turns on the switch B84.

In step S1002, the attachment 90 activates the attachment controller 92. In step S1003, the attachment 90 reads the content 93C from the attachment storage by the attachment controller 92, and applies decoding processing to the content 93C to generate displayable content. In step S1004, the attachment 90 transmits an outputted content to the display 80.

In step S1005, the display 80 receives the output content and displays the output content in step S1006.

As described above, in the device authentication system of the present embodiment, the display 80 includes the display CPU 81, the display controller 82, and the display storage 83; the display storage 83 stores the encoded code, correct code, and the access key; the attachment 90 includes the attachment CPU 91, and the attachment storage 93; and the attachment storage 93 stores the authentication key 93K in the protected area 93A. The display 80 obtains the authentication key 93K by the display controller 82, and decodes the encoded code using the authentication key, then compares the decoded code with correct code to verify the authentication target device. Because the authentication key is recorded on the protected area, reading and writing cannot be done without the access key.

Consequently, the effect is achieved that only the attachment having the authentication key in the protected area used for recording the content with protection can be connected to the display. Further effect is achieved that illegally-replicated content or attachment can be accurately judged.

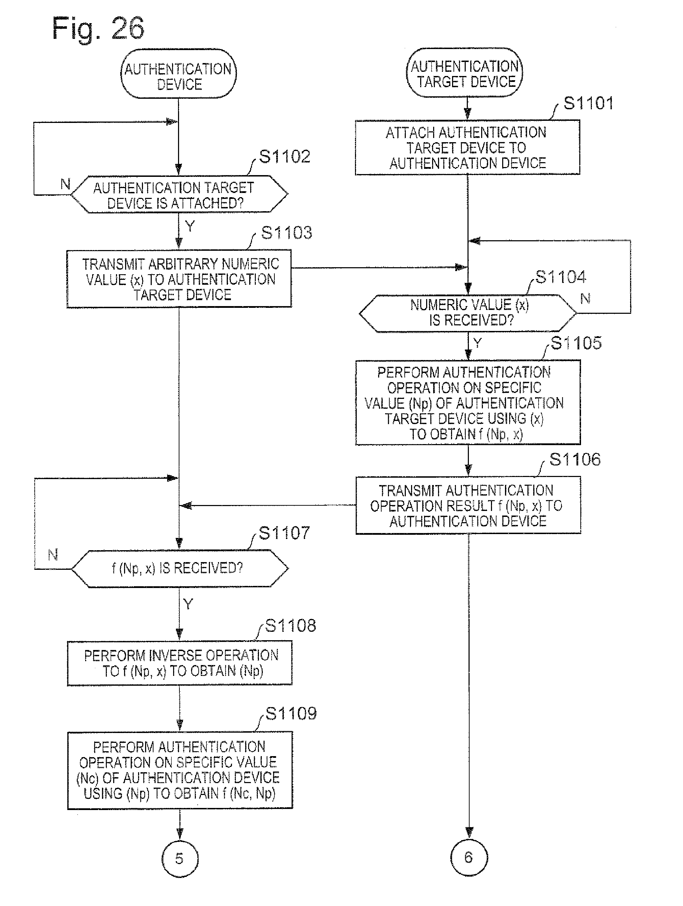

Figure 26 is a flowchart showing other operation of the first device authentication system shown in Figure 16. As shown in Figure 26, in step S1101, the authentication target device 520 is attached to the authentication device 510.

In step S1102, the authentication device 510 determines whether or not the authentication target device 520 is attached thereto. In the case where the authentication device 510 determines that the authentication target device 520 is attached, the authentication flow proceeds to step S1103, otherwise returns to step S1102.

The authentication device controller 512 reads the encoded authentication key from the authentication target device storage 523 using an encoded code(x), and decodes the encoded authentication key to obtain the authentication key (Np). The procedure is described below.

In step S1103, the authentication device 510 transmits arbitrary numerical value (x), which is an encoded code, to the authentication target device 520.

In step S1104, the authentication target device 520 determines whether or not the numeric value (x) has been received. In the case the numeric value (x) has been received, the flow proceeds to step S1105, otherwise proceeds to step S1104.

In step S1105, the authentication target device 520 performs authentication operation on the specific value (Np) as the authentication key of the authentication target device using (x), and obtains an operation result f(Np,x).

Here, authentication operation f (a, b) is an operational expression which can be computed by the authentication device 510 and the authentication target device 520.

In step S1106, the authentication target device 520 transmits the authentication operation result f (Np, x) to the authentication device 510.

In step S1107, the authentication device 510 determines whether or not the authentication operation result f (Np, x) has been received. In the case where the result has been received, the flow proceeds to step S1108, otherwise returns to step S1107.

In step S1108, the authentication device 510 applies the inverse operation to f (Np, x) to obtain (Np).

Correct code transmission means performs authentication operation on correct code (Nc) by a predetermined authentication expression f (a, b) using the authentication key (Np), then transmits the authentication result f(Nc, Np) to the authentication target device 520.

In step S1109, the authentication device 510 performs authentication operation on the specific value (Nc) as the correct code of the authentication device using (Np), and obtains operation result f (Nc, N p).

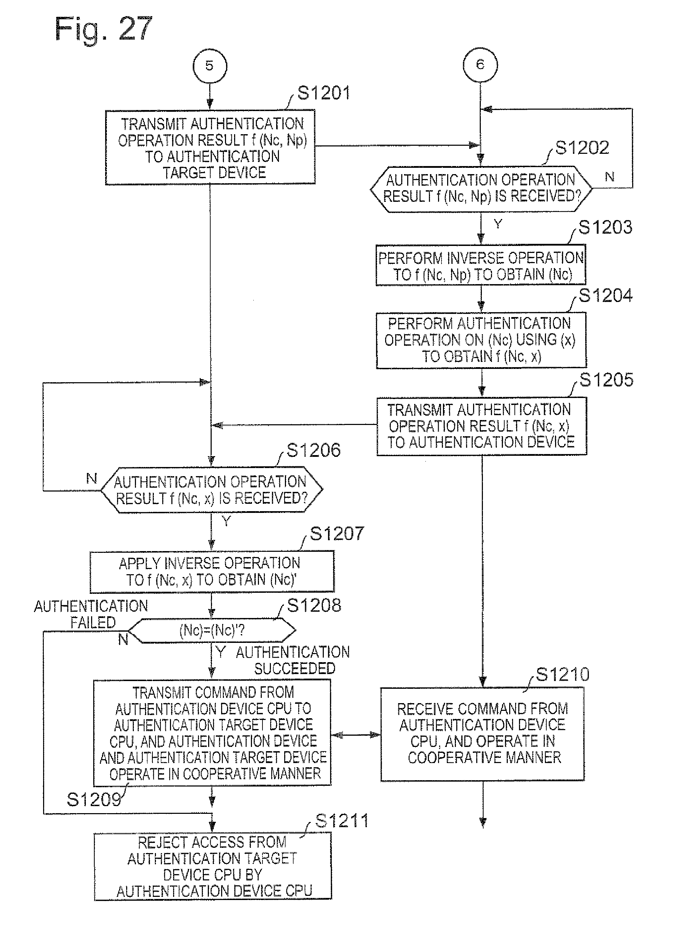

Figure 27 is a continued flowchart showing other operation of the first device authentication system shown in Figure 16. As shown in Figure 27, in step S1201, the authentication device 510 transmits the authentication operation result f (Nc, Np) to the authentication target device 520.

In step S1202, the authentication target device 520 determines whether or not the authentication operation result f (Nc, Np) has been received. In the case where the result has been received, the flow proceeds to step S1203, otherwise returns to step S1202.

In step S1203, the authentication target device 520 applies the inverse operation to the authentication operation result f (Nc, Np) to obtain (Nc).

The correct code comparison means reads the correct code (Nc) from the authentication target device storage 523 using the encoded code (x) where (Nc) has been obtained by the authentication target device 520 performing inverse-operation on the authentication result. The correct code (Nc) is decoded and obtained as (Nc)', then (Nc)' is compared with the correct code (Nc) before transmission.

In step S1204, the authentication target device 520 performs the authentication operation on (Nc) using (x), then obtains operation result f(Nc, x).

In step S1205, the authentication target device 520 transmits the authentication operation result f (N c, x) to the authentication device 510.

In step S1206, the authentication device 510 determines whether or not the authentication operation result (Nc, x) has been received. In the case where the result has been received, the flow proceeds to step S1207, otherwise returns to step S1206.

In step S1207, the authentication device 510 applies the inverse operation to the authentication operation result f (Nc, x) to obtain (Nc)'.

When the read correct code (Nc)' and the correct code (N c) before transmission coincide with each other, determination permission means gives permission on cooperated operation by the authentication target 510 with the authentication target device 520.

In step S1208, the authentication device 510 determines whether or not (Nc) and (Nc)' coincide with each other. In the case where they coincide with each other, the flow proceeds to step S1209. In the case where they do not coincide with each other, the flow returns to step S1211 as a failed authentication process.

In step S1209, the authentication device 510 transmits a command from the authentication device CPU 511 to the authentication target CPU 521. In step S1210, the authentication target device 520 receives the command from the authentication device CPU 511, and subsequently the authentication device 510 and the authentication target device 520 operate by cooperating with each other.

In step S1211, the authentication device 510 rejects access from the authentication target device CPU 521 by the authentication device CPU 511.

The device authentication system described above achieves device authentication by software processing in which the authentication device 510 and the authentication target device 520 utilize common operational processing.

Consequently, once the content is protected and stored in the authentication target device, authentication can be achieved by a method utilizing protected areas both in the authenticating processing and the content protected recording. Accordingly, new hardware is not required to be created, thus achieving the effect that an inexpensive device authentication system capable of accurately authenticating an authentication target device can be provided.

As described above, in the in-vehicle display device of the present embodiment, the central information display device 11 includes the LCD 101; the extension device 22 includes a device such as a low performance CPU 702; and the individual functional device 32 includes a primary unit such as a high performance CPU 102. Accordingly, the manufacturing cost of the central information display device 11 and the extension device 22 is reduced, providing the effect that even when the extension device 22 is installed in an automobile together with the central information display device 11, the economic burden to the users who do not want extended function can be limited to the minimum.

### INDUSTRIAL APPLICABILITY

The present invention can be applied to all the vehicles travelling on a road. The in-vehicle display device of the present invention is installed to a vehicle such as an automobile, a bus, or a motorcycle. The in-vehicle display device of the present invention may be previously incorporated into the front panel of e.g., an automobile, or may be constructed as a separate body and then later installed in e.g., an automobile.

### EXPLANATION OF NUMERALS AND SYMBOLS

10, 11: Central information display device
20, 21, 22: Extension device
30, 32: Individual functional device
301: GPS antenna module
302, 307: Navigation module
303, 308: Integrated navigation module
304, 309: AV module
305: One-seg antenna module,
306, 310: One-seg module.

510: Authentication device
511: Authentication device CPU
512: Authentication device controller
513: Authentication device storage
520: Authentication target device
521: Authentication target device CPU
523: Authentication target device storage

## Claims

1. An in-vehicle display device, comprising:
a central information display device having a liquid crystal display for displaying an image;
an individual functional device formed separately from the central information display device and for extending a function of the central information display device; and
an extension device to connect the central information display device to the individual functional device.

2. The in-vehicle display device according to claim 1, wherein
the central information display device includes a CPU for executing application software to extend the function of the central information display device, and a data communication controller for controlling data communications, and
the extension device includes a HUB connectable to the data communication controller.

3. The in-vehicle display device according to claim 1, wherein the extension device includes;
a CPU for executing application software to extend the function of the central information display device,
a data communication controller for controlling data communications, and
a HUB connectable to the data communication controller.

4. The in-vehicle display device according to claim 1, wherein the individual functional device formed separately from the central information display device includes a memory with a concealed area for storing application software to extend the function of the central information display device, and a CPU for executing the application software, and
the extension device to connect the central information display device to the individual functional device includes a data communication controller for controlling data communication with the CPU, and a HUB connectable to the data communication controller.

5. The in-vehicle display device according to claim 1, wherein the central information display device has a function of identifying the individual functional device formed separately from the central information display device and for extending the function of the central information display device.

6. The in-vehicle display device according to claim 5, wherein
the central information display device has a function of authenticating the individual functional device formed separately from the central information display device when identification data in a concealed area of a memory storing application software in the individual functional device with identification data stored in the central information display device coincide with each other.

7. An extension device for use in a central information display device to display an image on a liquid crystal display, wherein
an individual functional device to extend a function of the central information display device is formed separately from the central information display device, and the extension device connects the central information display device to the individual functional device.

8. The extension device according to claim 7, wherein
the central information display device includes a CPU for executing application software to extend the function of the central information display device and a data communication controller for controlling data communications,
the individual functional device formed separately from the central information display device includes a memory with a concealed area for storing the application software, and
the extension device connects the central information display device to the individual functional device, and includes a HUB connectable to the data communication controller.

9. The extension device according to claim 7, wherein
the central information display device and the individual functional device including a memory with a concealed area for storing application software to extend the function of the central information display device are separately formed, and
the extension device connects the central information display device to the individual functional device, and includes a CPU for executing the application software to extend the function of the central information display device, a data communication controller for controlling data communications, and a HUB connectable to the data communication controller.

10. The extension device according to claim 7, wherein
the extension device connects the central information display device to the individual functional device including a memory with a concealed area for storing application software to extend the function of the central information display device, and a CPU for executing the application software, and
the extension device further includes a CPU, a data communication controller for controlling data communications, and a HUB connectable to the data communication controller.

11. The extension device according to claim 7, wherein
the central information display device to display an image is formed separately from the individual functional device to extend the function of the central information display device,
the extension device connects the central information display device to the individual functional device, and
the extension device has a function of identifying the individual functional device to extend the function of the central information display device.

12. The extension device according to claim 11, wherein
the central information display device has a function of authenticating the individual functional device formed separately from the central information display device when identification data in a concealed area of a memory storing the application software of the individual functional device and identification data stored in the extension device coincide with each other.

13. An individual functional device for use in a central information display device to display an image on a liquid crystal display, wherein
the individual functional device is formed separately from the central information display device, and is connected to the central information display device via an extension device, and
the individual functional device extends a function of the central information display device.

14. The individual functional device according to claim 13, wherein the individual functional device is formed separately from the central information display device including a CPU for executing application software to extend the function of the central information display device and a data communication controller for controlling data communications,
the individual functional device is connected to the central information display device via the extension device including a HUB connectable to the data communication controller, and
the individual functional device includes a memory with a concealed area for storing the application software.

15. The individual functional device according to claim 13, wherein
the individual functional device is connected to the central information display device via the extension device including a CPU for executing application software to extend the function of the central information display device, a data communication controller for controlling data communications, and a HUB connectable to the data communication controller, and
the individual functional device includes a memory with a concealed area for storing the application software.

16. The individual functional device according to claim 13, wherein the individual functional device is connected to the central information display device via the extension device including a CPU, a data communication controller for controlling data communications, and a HUB connectable to the data communication controller, and
the individual functional device includes a memory with a concealed area for storing application software to extend the function of the central information display device, and a CPU for executing the application software.

17. The individual functional device according to claim 13, wherein
the central information display device has a function of identifying the individual functional device formed separately from the central information display device and to extend the function of the central information display device.

18. The individual functional device according to claim 17, wherein
the central information display device has a function of authenticating the individual functional device formed separately from the central information display device when identification data in a concealed area of a memory storing application software in the individual functional device and identification data stored in the central information display device coincide with each other.
